# FASCICULE DE BREVET EUROPEEN

(11) **EP 3 077 464 B1**
(45) Date de publication et mention de la délivrance du brevet: **31.01.2018**
(21) Numéro de dépôt: 14824504.6
(22) Date de dépôt: 02.12.2014
(51) Int. Cl.: C08G 77/08, C09D 5/16

(54) **ARTICLE PRÉSENTANT DES PROPRIÉTÉS ANTISALISSURES ET DESTINÉ À ÊTRE UTILISÉ DANS DES APPLICATIONS AQUATIQUES EN PARTICULIER MARINES**
ARTIKEL AUFWEISEND ANTIFOULING EIGENSCHAFTEN, FÜR WÄSSRIGE ANWENDUNGEN, BESONDERS IM MEERWASSER
ARTICLE HAVING ANTIFOULING PROPERTIES, USED IN AQUATIC APPLICATIONS , IN PARTICULAR IN MARINE APPLICATIONS

(30) Priorité: 03.12.2013 FR 1302812
(43) Date de publication de la demande: 12.10.2016
(73) Titulaire: Bluestar Silicones France SAS, 69003 Lyon (FR)
(72) Inventeur: MONDIERE, Aurélie, 69003 Lyon (FR); IRELAND, Tania, 38110 Cessieu (FR); SEGGIO, Anne, 69007 Lyon (FR)
(74) Mandataire: Mekki, Boualem
(86) Numéro de dépôt international: PCT/FR2014/000257
(87) Numéro de publication internationale: WO 2015/082780

(56) Documents cités:
- EP-A1- 2 147 957
- EP-A2- 0 885 938
- FR-A1- 2 856 694

## Description

La présente invention concerne un article présentant des propriétés antisalissures et destiné à être utilisé dans des applications aquatiques en particulier marines ainsi qu'un procédé pour retarder la croissance des organismes aquatiques sur les structures submersibles ou semi-submersibles.

L'invention se rapporte au domaine des peintures marines anti-salissures (« antifouling »). Les peintures marines antisalissures sont des revêtements de finition destinés à empêcher la fixation d'animaux ou de végétaux sur les carènes des navires. Elles sont employées pour des raisons de sécurité, de maintien de la manoeuvrabilité des navires, de diminution de la consommation de combustible, de lutte contre la corrosion et d'alourdissement des structures.

Le problème des « biosalissures » constitue un problème majeur résultant de l'immersion de matériaux dans les milieux marins. La prévention de ce phénomène représente un coût considérable en maintenance.

En effet, la formation des « biosalissures » ou «salissures» se produit lors de l'immersion dans l'eau de mer où une couche de molécules organiques et inorganiques est adsorbée à la surface du matériau extrêmement rapidement. Cette couche de matière adsorbée ou « biofilm » sert de médiateur pour l'adhésion des bactéries présentes en suspension dans le milieu marin.

Cette colonisation de la surface par les bactéries marines est rapide et un état stationnaire est atteint au bout d'une période de quelques heures à quelques jours. Enfin, d'autres organismes marins viennent coloniser la surface, les bactéries adhérentes recrutant ces autres organismes. L'ensemble de ces organismes vivants liés à la surface constitue les « biosalissures » ou « fouling », anglicisme qui désigne les salissures.

L'adhésion de salissures marines concerne toute structure immergée en mer: navires, pipelines, tours et circuits de refroidissement, structures portuaires, capteurs marins, systèmes d'aquaculture... Les dommages engendrés sont nombreux et divers. En effet, sur ces structures s'incrustent, par exemple, des organismes qui ont un effet négatif sur les performances des structures.

En particulier, pour les coques de navires, l'incrustation de divers organismes marins augmente les frottements entre les coques de navires et l'eau de mer, ce qui diminue la vitesse et peut entraîner une plus grande consommation de combustible. Ainsi le fond d'un navire qui n'est pas protégé par un système antisalissure peut, après moins de six mois passés en mer, être recouvert de 150 kg de salissure par mètre carré.

C'est pour éviter cette perte économique, et aussi pour mieux inhiber les phénomènes de corrosion, que l'on applique sur les parties immergées des structures exposées à l'eau des peintures dites antisalissures ou « antifouling » qui ont pour but de prévenir ou de réduire notablement l'encrassement par les incrustations d'organismes marins. Le principe des peintures antisalissures repose sur la libération contrôlée de la substance active à l'interface entre la surface et l'eau de mer. L'efficacité de la peinture est maintenue tant que la concentration en substance active relarguée en surface est efficace et régulière. La plupart des peintures antisalissures contiennent donc un produit biocide qui est le plus souvent un composé organométallique (à base d'étain, de cuivre ou de zinc) ou un composé organique (fongicide, algicide, bactéricide) qui prévient l'adhésion des salissures marines par leur activité toxique.

Cependant, le problème associé à l'utilisation de ces peintures est qu'elles relarguent dans le milieu marin des substances nocives pour la faune et la flore maritimes. De plus, les revêtements deviennent de plus en plus rugueux en se dégradant progressivement, ce qui augmente la consommation de carburant et accroît le bruit hydrodynamique émis par la structure immergée.

Cette nouvelle difficulté a été résolue en utilisant des peintures antisalissures autopolissables. En plus de posséder des agents biocides, ces peintures présentent, sous l'action de l'hydrolyse superficielle par l'eau de mer et de celle de l'érosion due au mouvement du navire, une perte régulière et contrôlée d'épaisseur en fonction du temps. La lente érosion du revêtement en contact avec l'eau de mer permettant de raviver constamment la surface en agents biocides.

Les peintures antisalissure autopolissables développées depuis les années 1960 étaient à base de sels d'étain. Il s'agissait de peintures autopolissantes, formulées à partir de copolymères de méthacrylate de tributylétain (TBT) qui possèdent un taux de lixiviation constant. Le TBT greffé sur un liant acrylique est libéré lentement par hydrolyse dans l'eau. Des exemples de ce type de peinture sont décrits dans les documents FR-A-2266733, FR-A-2557585, EP-A-0051930 et GB-A-2118196.

Le tributylétain (TBT), très efficace a donc été le biocide le plus utilisé dans les peintures antisalissures, mais ce produit, ses molécules de dégradation et ses métabolites se sont révélés gravement et durablement polluants. Pour ces raisons, l'organisation maritime internationale a interdit l'utilisation des peintures antisalissures à base d'étain.

Les peintures antisalissure utilisées aujourd'hui sont principalement à base de composés cuivrés et/ou de composés chimiques de synthèse mais également à base de polymères de type silicone.

Pour les peintures à base de cuivre, bien que moins toxiques que les sels d'étain, elles sont pratiquement toujours formulées avec une proportion massive d'oxyde cuivreux (voir par exemple le document EP-A-051930 ou FR-A-2557585), le liant principal étant à base de polymères spéciaux généralement du type acrylique. Cependant, elles ne sont efficaces que contre la faune marine et pour lutter contre la pousse d'algues, il est indispensable d'ajouter des herbicides qui peuvent faire peser de nouvelles menaces sur l'environnement.

Cette alternative n'apporte donc pas de solution durable pour protéger l'environnement de l'important rejet d'ions lourds, notamment ceux du cuivre consécutif à la mise en oeuvre intensive de peintures sans étain mais riches en cuivre.

Une autre solution pour prévenir l'encrassement des surfaces de structures en contact avec l'eau de mer consiste à recouvrir ces surfaces par au moins un revêtement protecteur, la couche externe du revêtement en contact avec l'eau étant un élastomère silicone. Ces revêtements sont préparés à partir de peintures dites « fouling-release coating ». Le principe de ces nouvelles peintures antisalissures est de créer une surface très lisse, à faible énergie de surface sur laquelle les organismes ont de grandes difficultés à adhérer. Quand de telles surfaces sont stationnaires, des organismes marins peuvent s'y déposer. Cependant, grâce à la souplesse et à la faible tension superficielle de la couche de finition à base de silicone, ces organismes sont tout simplement éliminés par la force du mouvement de l'eau ou l'effet de frottement causé par le mouvement du navire. Cela signifie également que, s'il y a suffisamment de mouvement de l'eau autour de la coque d'un navire, un effet autonettoyant naturel se produit.

Grâce à ces propriétés, même les navires qui sont moins fréquemment en mer ou dans des eaux à moindre mouvement bénéficient d'intervalles de nettoyage plus échelonnés. Cela est dû au fait que les organismes marins ont du mal à adhérer à la surface, ce qui rend aussi le nettoyage plus aisé.

Ces peintures à base de silicones formant un revêtement antisalissures sont donc très novatrices :
- elles sont totalement respectueuses de l'environnement marin : pas de rejet de métaux, et
- elles améliorant la glisse des navires, réduisant ainsi de 1 à 5% leur consommation de fuel et donc leurs émissions de gaz à effet de serre.

Il existe de nombreux brevets, par exemple les brevets FR-A-2 083 029 et US-A-3 702 778, décrivant de tels revêtements dont la couche finale, appelée « top coat », est en élastomère silicone durci à chaud ou à froid.

Par exemple, dans la demande de brevet US n°07/847 401, déposée le 6 Mars 1992, est décrit un système antisalissure à trois constituants, comprenant au moins une couche de primaire époxy, une couche de fixation ou primaire d'adhésion (« tie coat ») et une couche antisalissure (« top coat ») à base d'élastomère silicone. La couche finale de primaire époxy est normalement une couche mince que l'on applique pour obtenir une surface propre et fraîche à laquelle la couche de fixation peut adhérer. La couche de fixation comprend un organopolysiloxane et un constituant durcissant. La couche antisalissure comprend un organopolysiloxane, un silicate d'alkyle et un agent de durcissement ou un catalyseur séparé à base d'étain. La couche ou les couches de primaire époxy sont appliquées directement au support. La couche de fixation est appliquée sur la couche ou les couches de primaire époxy. La couche antisalissure en revêtement de silicone est ensuite appliquée et réticulée sur la couche de fixation, après durcissement partiel de cette dernière.

Une couche antisalissure (« top coat ») à base d'élastomère silicone peut comporter en outre des fluides qui améliorent l'effet "antisalissure" en particulier :
- des huiles méthylphénylpolysiloxanes (US-A-4 025 693),
- un composé liquide hydrocarboné, par exemple une polyoléfine,
- un plastifiant,
- une huile lubrifiante (FR-A-2 375 305),
- des paraffines liquides et des masses cireuses du type pétrolatum (JP-A-83/013 673),
- un polymère thermoplastique tel que du PVC,
- un copolymère chlorure de vinyle/acétate de vinyle (TOKAI JP-A-79/026 826), ou
- des tensio-actifs cationiques, anioniques, non-ioniques, amphotères (JP-A-85/258 271).

Afin de former le revêtement en élastomère silicone, les formulations silicones utilisées font généralement intervenir une huile silicone, généralement un polydiméthylsiloxane réactif à terminaison hydroxylées, éventuellement pré-fonctionnalisées par un silane de façon à présenter des extrémités alcoxy, un réticulant et un catalyseur de polycondensation, classiquement un sel d'étain ou un titanate d'alkyle, une charge de renfort et d'éventuels autres additifs comme des charges de bourrage, des promoteurs d'adhérence, des colorants, etc.

Ces compositions silicones qui « durcissent » par polymérisation et/ou réticulation dès la température ambiante (qui peut varier suivant les régions entre 5° et 30° C) sont bien connues de l'homme de l'art et sont classées en 2 groupes distincts :
- les compositions emballées sous la forme d'un «système monocomposant » (RTV-1), qui se présentent sous la forme d'une seule partie (ou composante) dont l'emballage est étanche à l'air, et
- les compositions emballées sous la forme d'un «système bicomposant » (RTV-2) qui se présentent sous la forme de deux parties distinctes (d'où l'appellation « bicomposant ») et dont l'emballage contenant le catalyseur est étanche à l'air.

Le terme "RTV" est l'acronyme pour "Room Temperature Vulcanising". Les emballages étanches à l'air ont pour but d'éviter la mise en contact des compositions silicones contenant le catalyseur avec l'humidité de l'air lors du stockage avant utilisation. Lors du durcissement (par polymérisation et/ou réticulation) de ces compositions silicones, l'eau est apportée par l'humidité atmosphérique dans le cas des RTV-1. Dans le cas des RTV-2, les dicarboxylates de diméthylétain sont couramment utilisés comme catalyseurs, mais ils peuvent nécessiter l'addition d'une quantité d'eau dans l'une des parties afin d'activer le catalyseur et permettre la réaction de polycondensation lorsque les contenus des deux parties sont mélangés à l'air ambiant de manière à former le réseau élastoméxique qui se traduit par un durcissement de la composition.

Par exemple, les compositions silicones mono-composantes (RTV-1) réticulent à froid suivant un mécanisme faisant intervenir un certains nombres de réactions qui peuvent être successives ou simultanées :
1. Une réaction de fonctionnalisation qui résulte de la mise en présence d'une huile silicone ayant des fonctions silanols, par exemple une huile silicone à terminaison hydroxylée, telles qu'un α,ω-(hydroxydiméthylsilyl)-polydiméthylsiloxane, avec un réticulant, tel qu'un silane de type SiX₄ (par exemple un silicate) ou un composé ayant la fonction suivante -SiX₃ avec X étant le plus souvent une fonction alcoxy, acyloxy, amino, amido, énoxy, aminoxy, cétiminoxy ou oxime. Ces fonctions sont bien connues pour être réactives avec les fonctions silanols. Le produit résultant est dénommé le plus souvent par l'expression «huile fonctionnalisée ». Cette réaction peut être souhaitée directement lors de la préparation de la composition (fonctionnalisation in-situ) ou éventuellement comme pré-étape avant l'addition des autres composants de la composition. Dans cette pré-étape, il est courant d'utiliser un catalyseur de fonctionnalisation tel que par exemple la lithine (ou hydroxyde de lithium) ou la potasse afin de conférer à la composition mono-composante une bonne stabilité au stockage. Pour ce faire l'homme du métier pourra choisir des catalyseurs spécifiques de fonctionnalisation et ajustera la quantité des réactifs de manière à être en excès molaire de réticulant par rapport aux fonctions silanols à fonctionnaliser.
2. Une réticulation par l'intermédiaire d'une hydrolyse de l'huile fonctionnalisée généralement effectuée grâce à la vapeur d'eau qui diffuse dans le matériau à partir de la surface exposée à l'atmosphère, et d'une condensation entre les groupements silanols formés et d'autres fonctions réactives résiduelles.

Quant aux compositions emballées dans des systèmes bicomposants (RTV-2), une première composante (ou partie) comprenant les polymères susceptibles de polycondenser et la deuxième composante est étanche à l'air et contient le catalyseur et le plus souvent un ou plusieurs réticulant(s). Les deux composants (ou parties) sont mélangées lors de l'emploi et le mélange durcit (par des réactions de réticulation) sous la forme d'un élastomère relativement dur notamment lorsque la composition comprend des charges de renfort. Ces compositions emballées dans des systèmes à deux composants sont bien connues et sont notamment décrites dans l'ouvrage de Walter Noll "Chemistry and Technology of Silicones" 1968, 2ème édition aux pages 395 à 398. Ces compositions comportent le plus souvent les ingrédients suivants :
- un polydiorganosiloxane réactif avec des groupements silanols en bout de chaine (par exemple un α,ω-bis(hydroxydiméthylsilyl)-polydiméthylsiloxane), dans la chaine ou en bout de chaine et dans la chaine
- un agent de réticulation,
- un catalyseur de condensation, et
- éventuellement de l'eau, souvent présente lorsqu'un dicarboxylate de dialkylétain est utilisé comme catalyseur (activation de ce dernier par la présence d'eau).

Le plus souvent, le catalyseur de condensation est à base d'un composé organique d'étain. En effet, de nombreux catalyseurs à base d'étain ont déjà été proposés comme catalyseur de réticulation de ces RTV-1 ou RTV-2. Des catalyseurs de polycondensation classiques comprennent des composés de dialkylétain, notamment des dicarboxylates de dialkylétain tels que le dilaurate et le diacétate de dibutylétain, les composés de titanate d'alkyle tels que le tétrabutyl ou le tétraisopropyltitanate, les chélates de titane (EP-A-0 885 933, US-5 519 104, US-4 515 932, US-4 563 498 et US-4 528 353).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Pour un développement durable, il apparaît donc nécessaire de développer de nouvelles peintures antisalissure ne comprenant pas de catalyseur toxique.

Par exemple, une caractéristique importante d'une composition silicone durcissable est le temps de mise en oeuvre (« pot-life » ou « temps de travail »), c'est-à-dire le temps pendant lequel la composition peut être utilisée après mélange sans durcir. Ce temps doit être suffisamment long, pour permettre son utilisation mais suffisamment court pour obtenir un revêtement dur. Par exemple pour un revêtement de type "tie coat" ou "top coat" un temps de travail entre 2 et 4 heures est généralement requis lorsque la température extérieure est comprise entre 20 et 30°C. Hors, un des moyen d'ajuster ce temps de travail est la nature des composants utilisés comme le catalyseur, de nouvelles stratégies pour lutter contre l'adhésion des salissures aquatiques et en particulier marines se développent aujourd'hui.

L'invention a pour but de proposer un article possédant des propriétés antisalissures au moyen de revêtements obtenus à partir de peintures antisalissures ne comportant pas de composants prohibés (biocide ou catalyseur) et ne contenant pas d'étain.

La présente invention concerne donc un article présentant des propriétés antisalissures et destiné à être utilisé dans des applications aquatiques en particulier marines, comprenant :
a) un support **(1),**
b) au moins une couche favorisant l'adhérence **(3)** déposée sur ledit support **(1),** et
c) au moins une couche antisalissure **(4)** déposée sur ladite couche favorisant l'adhérence **(3),** ledit article étant caractérisé en ce que ladite couche antisalissure **(4)** est obtenue après dépôt et durcissement au contact de l'humidité de l'air d'une composition **X** comprenant :
   (i) au moins un composé organosilicié **A'** comprenant au moins deux groupements hydrolysables et condensables, identiques ou différents, ou au moins deux fonctions silanols ≡SiOH,
   (ii) au moins un agent de réticulation **B',** et
   (iii) une quantité catalytiquement efficace d'au moins un catalyseur de polycondensation **C** qui est un complexe hétérométallique dont la formule chimique comprend :
      - au moins deux atomes métalliques M et M'différents, M étant un atome choisi parmi le groupe constitué par les atomes des colonnes 2 et 13 du tableau périodique des éléments et M'étant un atome choisi parmi le groupe constitué par les atomes de la colonne 4 du tableau périodique des éléments, et
      - au moins un ligand alcoxyde ou chélatant.

Pour atteindre cet objectif, la Demanderesse a eu le mérite de mettre en évidence, de manière tout à fait surprenante et inattendue, qu'un catalyseur de polycondensation **C** qui est un complexe hétérométallique permet de préparer des couches ou revêtements antisalissures utiles comme "tie coat" ou "top coat" dans les applications antisalissure. Les couches ou revêtements obtenus selon l'invention ont des propriétés d'adhésion remarquables sur les supports ainsi traités tout en conférant une surface traitée très lisse, à faible énergie de surface sur laquelle les organismes ont de grandes difficultés à adhérer.

Les catalyseurs selon l'invention sont mis en oeuvre dans les systèmes silicones à réticuler à des teneurs très faibles, et permettent suivant la teneur d'adapter les temps de travail à l'application tout en garantissant des excellentes duretés des élastomères obtenus. Le catalyseur selon l'invention peut être à l'état solide ou liquide. Il peut être incorporé seul ou dans un solvant approprié. Lorsqu'il est en solvant, une huile silicone peut être additionnée, le solvant est ensuite évaporé de manière à transférer le catalyseur dans un milieu silicone. Le mélange obtenu sert de base catalysante.

Ledit composé **C** est un complexe hétérométallique dont la formule chimique comprend :
- au moins deux atomes métalliques M et M' différents, M étant un atome choisi dans le groupe constitué par les atomes des colonnes 2 et 13 du tableau périodique des éléments et M' étant un atome choisi dans le groupe constitué par les atomes de la colonne 4 du tableau périodique des éléments, et
- au moins un ligand alcoxyde ou chélatant.

Selon un mode de réalisation préféré, le composé **C** est un complexe hétérométallique dont la formule chimique comprend :
- au moins deux atomes métalliques M et M' différents, M étant un atome de magnésium (Mg) ou d'aluminium (AI), et de préférence un atome d'aluminium (Al), et M'étant un atome de titane (Ti) ou de zirconium (Zr), et
- au moins un ligand alcoxyde ou chélatant.

Il peut donc être choisi de préférence dans le groupe constitué par les complexes hétérométalliques dont la formule chimique comprend au moins un ligand alcoxyde ou chélatant et au moins deux atomes métalliques M et M' différents choisis parmi les couples suivants :
- M est un atome de magnésium (Mg) et M' est un atome de titane (Ti),
- M est un atome de magnésium (Mg) et M' est un atome de zirconium (Zr),
- M est un atome d'aluminium (Al) et M' est un atome de titane (Ti), ou
- M est un atome d'aluminium (Al) et M'est un atome de zirconium (Zr).

Il est choisi de manière encore plus préférentielle dans le groupe constitué par les complexes hétérométalliques dont la formule chimique comprend au moins un ligand alcoxyde ou chélatant et au moins deux atomes métalliques M et M' différents choisis parmi les couples suivants :
- M est un atome d'aluminium (Al) et M' est un atome de titane (Ti), ou
- M est un atome d'aluminium (Al) et M' est un atome de zirconium (Zr).

De façon encore plus préférée, le composé **C** selon l'invention est choisi dans le groupe constitué par les complexes hétérométalliques dont la formule chimique comprend au moins un ligand alcoxyde ou chélatant et au moins deux atomes métalliques M et M', M étant un atome d'aluminium (AI) et M' est un atome de zirconium (Zr).

Le rapport molaire du métal M sur le métal M' peut être compris entre 0,1 et 10, et de façon préférée entre 0,25 et 4.

Selon un mode de réalisation très préféré, le composé **C** selon l'invention est choisi dans le groupe constitué par :
- les complexes hétérométalliques dont la formule chimique comprend au moins un ligand alcoxyde ou chélatant et au moins deux atomes métalliques M et M' différents, M étant un atome d'aluminium et M' étant un atome de zirconium et dans lesquels le rapport molaire Al/Zr vaut 1 ;
- les complexes hétérométalliques dont la formule chimique comprend au moins un ligand alcoxyde ou chélatant et au moins deux atomes métalliques M et M' différents, M étant un atome d'aluminium et M' étant un atome de zirconium et dans lesquels le rapport molaire Al/Zr vaut 2 ;
- les complexes hétérométalliques dont la formule chimique comprend au moins un ligand alcoxyde ou chélatant et au moins deux atomes métalliques M et M' différents, M étant un atome d'aluminium et M' étant un atome de titane et dans lesquels le rapport molaire Al/Ti vaut 1 ;
- les complexes hétérométalliques dont la formule chimique comprend au moins un ligand alcoxyde ou chélatant et au moins deux atomes métalliques M et M' différents, M étant un atome d'aluminium et M' étant un atome de titane et dans lesquels le rapport molaire Al/Ti vaut 2 ;
- les complexes hétérométalliques dont la formule chimique comprend au moins un ligand alcoxyde ou chélatant et au moins deux atomes métalliques M et M' différents, M étant un atome de magnésium et M' étant un atome de zirconium et dans lesquels le rapport molaire Mg/Zr vaut 1 ;
- les complexes hétérométalliques dont la formule chimique comprend au moins un ligand alcoxyde ou chélatant et au moins deux atomes métalliques M et M' différents, M étant un atome de magnésium et M' étant un atome de titane et dans lesquels le rapport molaire Mg/Ti vaut 1.
Selon un mode de réalisation encore plus préféré, le composé **C** est choisi dans le groupe constitué par :
- les complexes hétérométalliques dont la formule chimique comprend :
   - au moins deux atomes métalliques M et M' différents, M étant l'aluminium et M' étant le zirconium et dans lesquels le rapport molaire Al/Zr = 0,5, 1 ou 2 ; et
   - au moins un ligand alcoxyde ou chélatant ; et
- les complexes hétérométalliques dont la formule chimique comprend :
   - au moins deux atomes métalliques M et M' différents, M étant l'aluminium et M' étant le titane et dans lesquels le rapport molaire Al/Ti = 1 ou 2, et
   - au moins un ligand alcoxyde ou chélatant.

Un ou plusieurs ligands viennent complexer les atomes métalliques. Le complexe hétérométallique selon l'invention comprend au moins un ligand choisi parmi un ligand alcoxyde ou un ligand chélatant.

L'expression « ligand alcoxyde » désigne un ligand de formule chimique OR, R représentant un groupe alkyle en C₁ à C₂₄. De préférence, le ligand alcoxyde est un ligand de formule chimique OR, R représentant un groupe alkyle en C₂ à C₁₂, et de façon plus préférée, R est choisi dans le groupe constitué par l'éthyle, l'isopropyle, le n-propyle, le n-butyle, le sec-butyle, le tert-butyle, l'isobutyle, le 2-éthyl-hexyle et le 2-butyl-octyle.

L'expression « ligand chélatant » résigne un ligand lié au moins deux fois à un ou plusieurs atomes métalliques. Le ligand chélatant peut être choisi parmi les ligands chélatants bidentates, tridentates ou tétradentates, de façon préférée bidentate. Un grand nombre de ligands chélatants sont connus par l'homme du métier.

Dans ce qui suit, les ligands chélatants sont décrits sous leur forme libre et neutre. Lorsqu'ils sont associés à un élément central dans un complexe, il est possible que ces ligands chélatants aient perdu un proton ou se présentent sous une forme tautomérique.

De façon préférée, le ligand chélatant est un ligand de formule générale (I) : 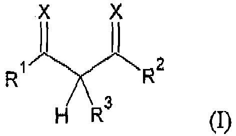 dans laquelle :
- chaque X représente indépendamment l'un de l'autre un atome d'oxygène ou un groupe NR', R' représentant un groupe alkyle en C₁ à C₈, éventuellement substitué une ou plusieurs fois par un atome d'halogène et/ou par un groupe aryle ;
- R¹ et R², indépendamment l'un de l'autre, représentent :
- un groupe alkyle ou cycloalkyle en C₁ à C₈, éventuellement substitué une ou plusieurs fois par un atome d'halogène et/ou par un groupe aryle,
- un groupe aryle, éventuellement substitué une ou plusieurs fois par un atome d'halogène,
- un groupe alcoxyde en C₁ à C₈, éventuellement substitué une ou plusieurs fois par un atome d'halogène et/ou par un groupe aryle,
- -OH,
- -NR"₂, chaque R" représentant indépendamment l'un de l'autre un atome d'hydrogène ou un groupe alkyle en C₁ à C₈, éventuellement substitué une ou plusieurs fois par un atome d'halogène et/ou par un groupe aryle ;
- R³ représente un groupe monovalent, de préférence un atome d'hydrogène ou un groupe alkyle en C₁ à C₄.

De préférence, le ligand chélatant est choisi dans le groupe constitué par un ligand de type β-céto-ester, un ligand de type β-dieser, un ligand de type β-dicétone, un ligand de type β-diacide, un ligand de type β-cétoamide et un ligand de type β-diimide.

De façon encore plus préférée, le ligand chélatant est choisi dans le groupe constitué par l'acétoacétate d'éthyle, l'éthyl acétate d'éthyle, le propionyl acétate d'éthyle, le 2-éthyl acétoacétate d'éthyle, le trifluoro acétoacétate d'éthyle, le t-butyl acétatoacétate d'éthyle, le cyclopropyl acétoacétate d'éthyle, l'acétoacétonate de propyle, l'acétocétone, l'hexafluoroacetylacetone, le 4,4,4-trifluoro-1-phenyl-1,3-butanedione, le 1,3-diphenyl-1,3-propanedione, le 2,2,6,6-tetramethyl-3,5-heptanedione, le diisopropylmalonate, l'acétoacétamide, le bis-N,N'-(2-phenylethyl)-2,4-diiminopentane, l'acrylate de méthyle, le 1,8-diazabicyclo(5.4.0)undéc-7-ène et le pivaloyl acétate de méthyle.

Le complexe hétérométallique peut comprendre un seul ligand ou plusieurs ligands. Le nombre et la nature des ligands est adapté au nombre de coordination des atomes métalliques. Lorsque le complexe hétérométallique ne comprend qu'un seul ligand, celui-ci est choisi parmi un ligand alcoxyde et un ligand chélatant tels que définis ci-dessus. Lorsque le complexe hétérométallique comprend plusieurs ligands, ceux-ci peuvent être identiques ou différents. Il peut s'agir par exemple de plusieurs ligands alcoxydes identiques ou différents, de plusieurs ligands chélatants identiques ou différents, ou d'un mélange de ligand(s) alcoxyde(s) et de ligand(s) chélatant(s).

En outre, d'autres types de ligands peuvent être présents.

Tout particulièrement, le complexe hétérométallique peut comprendre un ou plusieurs ligands oxo (O) un ou plusieurs ligands hydroxyle (OH) et/ou un ou plusieurs ligands alcool. Ces ligands sont susceptibles d'être présents notamment en raison des phénomènes d'oligomérisation et d'hydrolyse des complexes métalliques à ligands alcoxydes. L'expression « ligand alcool » désigne un ligand de formule chimique (alkyle en C₁ à C₂₄)-OH.

Par ailleurs, le complexe hétérométallique peut comprendre d'autres ligands neutres. L'expression « ligand neutre » désigne dans la présente invention un ligand qui coordonne le métal en apportant à celui-ci une paire d'électrons. L'homme du métier utilisera tout type de ligand neutre adapté au métal concerné. Le ligand neutre peut être choisi parmi les ligands neutres porteurs d'au moins une paire d'électrons libres tels que les amines, les phosphines, les éthers et l'eau, les ligands se coordonnant par l'intermédiaire d'une ou de plusieurs liaisons π tels que l'éthylène, et les ligands se coordonnant par l'intermédiaire d'une liaison σ tel que H₂. De préférence, le complexe hétérométallique selon l'invention ne comprend pas d'autre ligand neutre.

Le composé **C** selon l'invention peut être un complexe hétérométallique de formule générale (II) :

[MₘM'ₙ(Lig1)ₓ(Lig2)_{y}(Lig3)_{z}] (II)

dans laquelle :
- le symbole M représente un atome de magnésium Mg ou d'aluminium Al ;
- le symbole M'représente un atome de titane Ti ou de zirconium Zr ;
- le symbole Lig1 représente un ligand alcoxyde ;
- le symbole Lig2 représente un ligand chélatant ;
- le symbole Lig3 représente un ligand choisi dans le groupe constitué par : un ligand oxo, un ligand hydroxyde, un ligand alcool et un ligand neutre ; et
- m, n, x, y et z sont des nombres tels que m > 0, n > 0, x ≥ 0, y ≥ 0, z ≥ 0 et (x+y) > 0.

Dans la notation ci-dessus, les nombres m, n, x, y et z peuvent être des nombres entiers ou non. Lorsqu'il s'agit de nombres non entiers, l'homme du métier comprendra que la formule (II) est une formule générale basée sur la composition du complexe et sur les rapports molaires entre les différents atomes ou groupements atomiques. De plus, il est entendu dans cette formule que si x est différent de zéro, alors un ou plusieurs ligands Lig1 identiques ou différents entre eux peuvent être présents, si y est différent de zéro, alors un ou plusieurs ligands Lig2 identiques ou différents entre eux peuvent être présents, et si z est différents de zéro, alors un ou plusieurs ligands Lig3 identiques ou différents entre eux peuvent être présents.

Les nombres m et n peuvent indépendamment être choisis entre 0 et 20, zéro étant exclu, et le rapport m/n peut être compris entre 0,1 et 10. De préférence, m et n peuvent être indépendamment être égal à 1, 2, 3 ou 4. En outre, le rapport m/n est de préférence compris entre 0,25 et 4.

Le composé **C** selon l'invention peut notamment être choisi dans le groupe constitué par les complexes hétérométalliques de formules (IIa) à (IIf) :

[AlZr(Lig1)ₓ(Lig2)_{y}(Lig3)_{z}] (IIa)

[Al₂Zr(Lig1)ₓ(Lig2)_{y}(Lig3)_{z}] (IIb)

[AlTi(Lig1)ₓ(Lig2)_{y}(Lig3)_{z}] (IIc)

[Al₂Ti(Lig1)ₓ(Lig2)_{y}(Lig3)_{z}] (IId)

[MgZr(Lig1)ₓ(Lig2)_{y}(Lig3)_{z}] (IIe)

[MgTi(Lig1)ₓ(Lig2)_{y}(Lig3)_{z}] (IIf)

dans lesquelles Lig1, Lig2, Lig3, x, y et z sont tels que définis ci-dessus.

Le complexe hétérométallique selon l'invention comprend au moins un ligand alcoxyde Lig1 ou un ligand chélatant Lig2. Dans la formule générale (II), x, y et z sont des nombres tels que x ≥ 0, y ≥ 0, z ≥ 0 et (x+y) > 0. x et y ne peuvent donc pas être égaux à zéro en même temps. x peut être compris de façon préférée entre 0 et 20, et de façon plus préférée entre 0,1 et 12. y peut être compris de façon préférée entre 0 et 20, et de façon plus préférée entre 2 et 10. z peut être compris de façon préférée entre 0 et 2. Lig1 est un ligand alcoxyde de préférence tel que décrit ci-dessus, Lig2 est un ligand chélatant de préférence tel que décrit ci-dessus et Lig3 est un ligand neutre de préférence tel que décrit ci-dessus.

Deux modes de réalisation particulièrement préférés sont présentés ci-dessous.

Selon un premier mode de réalisation particulièrement préféré de la présente invention, le composé **C** est un complexe alcoxyde hétérométallique dont la formule chimique comprend au moins deux atomes métalliques différents M et M', M étant un atome de magnésium ou d'aluminium et M' étant un atome de titane ou de zirconium. Ce complexe comprend au moins un ligand alcoxyde tel que défini ci-dessus.

Les ligands de ce complexe peuvent être uniquement des alcoxydes, identiques ou différents entre eux, éventuellement en mélange avec un ou plusieurs ligands choisis dans le groupe constitué par un ligand oxo, un ligand hydroxyde et un ligand alcool.

Le composé **C** selon ce mode de réalisation peut être un complexe hétérométallique de formule générale (II) dans laquelle «y» vaut zéro et «x» est différent de zéro. Il s'agit de préférence complexe alcoxyde hétérométallique de formule générale (III) :

[MₘM'ₙ(Lig1)ₓ(Lig3)_{z}] (III)

dans laquelle :
- le symbole M représente un atome de magnésium Mg ou d'aluminium Al ;
- le symbole M'représente un atome de titane Ti ou de zirconium Zr ;
- le symbole Lig1 représente un ligand alcoxyde ;
- le symbole Lig3 représente un ligand choisi dans le groupe constitué par un ligand oxo, un ligand hydroxyde et un ligand alcool ;
- m, n, x, y et z sont des nombres tels que m > 0, n > 0, x > 0 et z ≥ 0.

En particulier, le composé **C** est un complexe alcoxyde hétérométallique dont la formule chimique comprend :
- au moins deux atomes métalliques M et M' différents, M étant le magnésium ou l'aluminium et M'étant le titane ou le zirconium, et
- au moins un ligand alcoxyde ;
et de préférence ledit complexe alcoxyde hétérométallique est choisi dans le groupe constitué par :
- les complexes alcoxydes hétérométalliques dont la formule chimique comprend :
   - au moins deux atomes métalliques M et M' différents, M étant l'aluminium et M'étant le zirconium,
   - au moins un ligand alcoxyde de formule chimique O-(alkyle linéaire ou ramifié en C₃ à C₁₂), et
   - dans lesquels le rapport molaire Al/Zr vaut 0,5, 1 ou 2;
- les complexes alcoxydes hétérométalliques dont la formule chimique comprend :
   - au moins deux atomes métalliques M et M' différents, M étant le magnésium et M'étant le zirconium,
   - au moins un ligand alcoxyde de formule chimique O-(alkyle linéaire ou ramifié en C₂ à C₁₂), et
   - dans lesquels le rapport molaire Mg/Zr vaut 0,5, 1, 2, ou 4 ; et
- les complexes alcoxydes hétérométalliques dont la formule chimique comprend :
   - au moins deux atomes métalliques M et M' différents, M étant l'aluminium et M' étant le titane,
   - au moins un ligand alcoxyde de formule chimique O-(alkyle linéaire ou ramifié en C₃ à C₁₂), et
   - dans lesquels le rapport molaire Al/Ti vaut 1 ou 2 ;
et de façon encore plus préférée ledit complexe alcoxyde hétérométallique est choisi dans le groupe constitué par AlZr(OBu)₄(OsBu)₃, Al₂Zr(OnBu)₄(OsBu)₆, AlZr₂(OnBu)₁₁, AlTi(OsBu)₃(OnBu)₄ et Al₂Ti(OnBu)₁₀.

Certains complexes alcoxydes hétérométalliques selon ce mode de réalisation sont disponibles dans le commerce. Par exemple, la société Gelest fournit des complexes alcoxydes hétérométalliques aluminium-titane, aluminium-zirconium et magnésium-zirconium.

De plus, les complexes alcoxydes hétérométalliques selon ce mode de réalisation peuvent être préparés à partir des alcoxydes monométalliques correspondants. Une voie possible de synthèse consiste à faire réagir ensemble les alcoxydes monométalliques sous agitation, de préférence sans solvant et de préférence à température ambiante, pendant une durée suffisante pour que la réaction d'association ait lieu. Généralement, cette réaction est exothermique.

Les complexes alcoxydes hétérométalliques désirés peuvent être obtenus de façon classique par échange de ligands. L'échange de ligands alcoxydes peut classiquement être réalisé par réaction d'un premier complexe avec l'alcool correspondant au ligand alcoxyde désiré, cet alcool étant moins volatil que l'alcool correspondant au ligand du premier complexe, éventuellement dans un solvant appropriée, avec chauffage et de préférence sous pression réduite.

Selon un second mode de réalisation particulièrement préféré de la présente invention, le composé C est un complexe chélaté hétérométallique dont la formule chimique comprend au moins deux atomes métalliques différents M et M', M étant un atome de magnésium ou d'aluminium et M' étant un atome de titane ou de zirconium. Ce complexe comprend au moins un ligand chélatant tel que défini ci-dessus.

Les ligands de ce complexe peuvent être uniquement des chélates, identiques ou différents entre eux, ou bien un ou plusieurs chélates en mélange avec un ou plusieurs ligands choisis dans le groupe constitué par un ligand alcoxyde, un ligand oxo, un ligand hydroxyde et un ligand alcool.

Le composé **C** selon ce mode de réalisation peut être un complexe hétérométallique de formule générale (II) dans laquelle « y » est différent de zéro. Il s'agit de préférence d'un complexe chélaté hétérométallique de formule générale (IV) :

[MₘM'ₙ(Lig1)ₓ(Lig2)_{y}(Lig3)_{z}] (IV)

dans laquelle :
- le symbole M représente un atome de magnésium Mg ou d'aluminium Al ;
- le symbole M' représente un atome de titane Ti ou de zirconium Zr ;
- le symbole Lig1 représente un ligand alcoxyde ;
- le symbole Lig2 représente un ligand chélatant ;
- le symbole Lig3 représente un ligand choisi dans le groupe constitué par un ligand oxo, un ligand hydroxyde et un ligand alcool ;
- m, n, x, y et z sont des nombres tels que m > 0, n > 0, x ≥ 0, y > 0 et z ≥ 0.

En particulier, le composé **C** est un complexe chélaté hétérométallique dont la formule chimique comprend :
- au moins deux atomes métalliques différents M et M', M étant le magnésium ou l'aluminium et M' étant le titane ou le zirconium, et
- au moins un ligand chélate ;
ledit complexe chélaté hétérométallique étant choisi de préférence dans le groupe constitué par :
- les complexes chélatés hétérométalliques dont la formule chimique comprend :
   - au moins deux atomes métalliques différents M et M', M étant l'aluminium et M' étant le zirconium,
   - au moins un ligand chélatant, de préférence choisi dans le groupe constitué par l'acétoacétate d'éthyle, l'acétoacétate de propyle et le malonate de diisopropyle,
   - éventuellement au moins un ligand alcoxyde de formule chimique O-(alkyle linéaire ou ramifié en C₃ ou C₄), et
   - ayant un rapport molaire Al/Zr = 1 ou 2 ;
- les complexes chélatés hétérométalliques dont la formule chimique comprend :
   - au moins deux atomes métalliques différents M et M', M étant l'aluminium et M' étant le zirconium,
   - au moins un ligand chélatant, de préférence choisi dans le groupe constitué par l'acétoacétate d'éthyle, l'acétoacétate de propyle et le malonate de diisopropyle,
   - ayant un rapport molaire Al/Zr = 1 ou 2, et
   - ne comprenant pas de ligand alcoxyde ;
- les complexes chélatés hétérométalliques dont la formule chimique comprend :
   - au moins deux atomes métalliques différents M et M', M étant le magnésium et M' étant le zirconium,
   - au moins un ligand chélatant, de préférence l'acétoacétate d'éthyle, et
   - ayant un rapport molaire Mg/Zr = 1 ;
- les complexes chélatés hétérométalliques dont la formule chimique comprend :
   - au moins deux atomes métalliques différents M et M', M étant l'aluminium et M' étant le titane,
   - au moins un ligand chélatant, de préférence choisi dans le groupe constitué par l'acétoacétate d'éthyle et l'acétoacétate de propyle,
   - éventuellement au moins un ligand alcoxyde de formule chimique O-(alkyle linéaire ou ramifié en C₃ ou C₄), et
   - ayant un rapport molaire Al/Ti = 1 ; et
- les complexes chélatés hétérométalliques dont la formule chimique comprend :
   - au moins deux atomes métalliques différents M et M', M étant le magnésium et M' étant le titane,
   - au moins un ligand chélatant, de préférence l'acétoacétate d'éthyle,
   - éventuellement au moins un ligand alcoxyde de formule chimique O-(alkyle linéaire ou ramifié en C₃), et
   - ayant un rapport molaire Mg/Ti = 1 ;
et de façon encore plus préféré ledit complexe chélaté hétérométallique étant choisi dans le groupe constitué par AlZr(EAA)₃(OnPr)₄, Al₂Zr(EAA)₆(OnPr)₄, AlZr(EAA)₇, Al₂Zr(EAA)₁₀ et AlTi(EAA)₃(OnBu)₄.

Certains complexes chélatés monométalliques sont disponibles dans le commerce. Par exemple, la société DuPont propose des complexes chélatés de titane ou de zirconium sous le nom Tyzor®.

D'autres complexes chélatés monométalliques possédant les ligands désirés peuvent être obtenus de façon classique par échange de ligands. L'échange de ligands peut classiquement être réalisé par réaction d'un premier complexe avec le précurseur correspondant au ligand désiré, éventuellement dans un solvant appropriée, avec chauffage et de préférence sous pression réduite.

La synthèse des complexes chélatés hétérométalliques peut être réalisée selon trois méthodes :
- Par une réaction d'acide-base de Lewis en mettant en contact un ou plusieurs complexes alcoxydes et/ou chélatés monamétalliques, de préférence à température ambiante et sans solvant, pendant une durée suffisante pour que la réaction d'association ait lieu, par exemple selon le schéma réactionnel suivant :

   n M(Lig1)ₓ(Lig2)_{y}(Lig3)_{z} + mM'(Lig1')_{x'} → MₙM'ₘLig1)ₓ(Lig1')_{x'}(Lig2)_{y}(Lig3)_{z}

   dans lequel M, M', Lig1, Lig2, Lig3, n, m, x, y et z ont les significations données ci-avant, Ligl' représente au ligand alcoxyde identique ou différent de Lig1, x' est un nombre tel que x' > 0 ;
- Par substitution d'un ou plusieurs ligands alcoxydes sur un complexe alcoxyde hétérométallique par un ligand chélate, par exemple selon le schéma réactionnel suivant :

   MₙM'ₘ(Lig1)ₓ(Lig3)_{z} + y Lig2 → MₙM'ₘ(Lig1)_{x-y}(Lig2)_{y}(Lig3)_{z} + y Lig1

   dans lequel M, M', Lig1, Lig2, Lig3, n, m, x, y et z ont les significations données ci-avant ;
- Par synthèse en deux étapes :
   a) synthèse d'un complexe chélaté monométallique à partir d'un complexe alcoxyde monométalliques par échange de ligands avec un chélate, par exemple selon le schéma réactionnel suivant:

      Mₙ(Lig1)ₓ(Lig3)_{z} + y Lig2 → Mₙ(Lig1)_{x-y}(Lig2)_{y}(Lig3)_{z} + y Lig1
   b) puis association du complexe chélaté monométallique avec un complexe alcoxyde monométallique à base d'un métal différent, par exemple selon le schéma réactionnel suivant :

      Mₙ(Lig1)ₓ(Lig2)_{y}(Lig3)_{z} + m M'(Lig1')_{x'} → MₙM'ₘ(Lig1)ₓ(Lig1')_{x'}(Lig2)_{y}(Lig3)_{z}

Cette voie de synthèse en deux étapes peut avantageusement être monotope (« one-pot »), sans isolement des produits intermédiaires.

Les inventeurs ont découvert que, de façon tout à fait inattendue, les complexes hétérométalliques selon l'invention étaient de meilleurs catalyseurs de la réaction de condensation des groupements condensables ou hydrolysables et condensables d'un polyorganosiloxane, et en particulier de la réaction de polycondensation des silicones, que le simple mélange des complexes monométalliques correspondants.

Le composé **C** en tant que catalyseur est présent dans la composition durcissable en présence d'eau ou d'humidité de l'air selon l'invention en quantité catalytique. La concentration en catalyseur dans la composition selon l'invention peut être comprise entre 0,1% et 6%, de préférence entre 1% et 3%, en poids, par rapport au poids total de la composition.

Le catalyseur selon l'invention peut être à l'état solide ou liquide. Il peut être incorporé seul ou dans un solvant approprié. Lorsqu'il est en solvant, une huile silicone ou tout autre solvant compatible comme des coupes pétrolières peut être additionnée, le solvant est ensuite évaporé de manière à transférer le catalyseur dans un milieu silicone. Le mélange obtenu peut servir alors de « base catalysante ».

Selon un mode de réalisation particulier, l'invention concerne un article comprenant :
a) un support **(1),**
b) au moins une couche primaire **(2)** déposée sur ledit support **(1)** comprenant au moins un produit anticorrosif,
c) au moins une couche **(3)** favorisant l'adhérence déposée sur ladite couche primaire **(2),** et
d) au moins une couche antisalissure **(4)** déposée sur ladite couche **(3)** favorisant l'adhérence,
ledit article étant caractérisé en ce que ladite couche antisalissure **(4)** est obtenue après dépôt et durcissement au contact de l'humidité de l'air d'une **composition X** comprenant :
(i) au moins un composé organosilicié **A'** comprenant au moins deux groupements hydrolysables et condensables, identiques ou différents, ou au moins deux fonctions silanol ≡SiOH,
(ii) au moins un agent de réticulation **B**', et
(iii) une quantité catalytiquement efficace d'au moins un catalyseur de polycondensation **C** selon l'invention et qui est un complexe hétérométallique dont la formule chimique comprend :
   - au moins deux atomes métalliques M et M' différents, M étant un atome choisi parmi le groupe constitué par les atomes des colonnes 2 et 13 du tableau périodique des éléments et M'étant un atome choisi parmi le groupe constitué par les atomes de la colonne 4 du tableau périodique des éléments, et
   - au moins un ligand alcoxyde ou chélatant.

Selon un autre mode de réalisation particulier, l'invention concerne un article selon l'invention est caractérisé en ce que la composition **X** comprend :
(i) au moins un composé organosilicié **A'** comprenant au moins deux groupements hydrolysables et condensables, identiques ou différents, ou au moins deux fonctions silanol ≡SiOH,
(ii) au moins un agent de réticulation **B**', et
(iii) une quantité catalytiquement efficace d'au moins un catalyseur de polycondensation **C** selon l'invention et qui est un complexe hétérométallique dont la formule chimique comprend :
   - au moins deux atomes métalliques M et M' différents, M étant un atome de magnésium ou d'aluminium et M'étant un atome de titane ou de zirconium, et
   - au moins un ligand alcoxyde ou chélatant.

Selon deux modes de réalisation préféré, le catalyseur de polycondensation **C** est choisi parmi :
- le groupe constitué par: AlZr(OBu)₄(OsBu)₃, Al₂Zr(OnBu)₄(OsBu)₆, AlZr₂(OnBu)₁₁, AlTi(OsBu)₃(OnBu)₄ et Al₂Ti(OnBu)₁₀, ou
- le groupe constitué par: AlZr(EAA)₃(OnPr)₄, Al₂Zr(EAA)₃(OnPr)₄, AlZr(EAA)₇, Al₂Zr(EAA)₁₀ et AlTi(EAA)₃(OnBu)₄.

La quantité de catalyseurs de polycondensation **C** selon l'invention est comprise entre 0,01 et 10 % en poids de la masse totale de la composition **X,** de préférence entre 0,1 et 5 %, que ce soit une préparation mono ou bicomposant.

De préférence, le composé organosilicié **A'** est un polyorganosiloxane comprenant :
(i) au moins deux motifs siloxyles de formule **(4')** suivante : 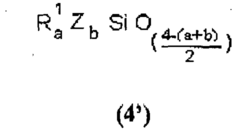 dans laquelle :
   - les symboles R¹, identiques ou différents, représentent des radicaux hydrocarbonés monovalents en C₁ à C₃₀,
   - les symboles Z, identiques ou différents, représentent chacun un groupement hydrolysable et condensable ou un groupement hydroxy et de préférence sont choisis parmi le groupe constitué par les groupements de type: hydroxy, alcoxy, alcoxy-alkylène-oxy, amino, amido, acylamino, aminoxy, iminoxy, cétiminoxy, acyloxy, iminoxi, cétiminoxy et énoxy et encore plus préférentiellement Z est un groupement hydroxy,
   - a est égal à 0, 1 ou 2, b est égal à 1, 2 ou 3, la somme a + b est égale à 1, 2 ou 3,
(ii) et éventuellement un ou plusieurs motif(s) siloxyle(s) de formule (5') suivante : 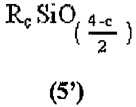 dans laquelle :
   - les symboles R, identiques ou différents, représentent des radicaux hydrocarbonés monovalent en C₁ à C₃₀ éventuellement substitués par un ou plusieurs atomes d'halogène ou par des groupements: amino, éther, ester, époxy, mercapto ou cyano, et
   - le symbole c est égal à 0, 1, 2 ou 3.

De préférence, le composé organosilicié **A'** selon l'invention sera porteur d'au moins deux groupements choisis parmi le groupe constitué par les groupements de type : hydroxy, alcoxy, alcoxy-alkylène-oxy, amino, amido, acylamino, aminoxy, iminoxy, cétiminoxy, acyloxy et énoxy.

De préférence, le composé organosilicié **A'** est un polyorganosiloxane de formule générale **(6') :**

ZₙR₃₋ₙSi-O-(SiR₂-O)ₓ-SiR₃₋ₙZₙ **(6')**

dans laquelle :
- les symbole Z, identiques ou différents, représentent chacun un groupement hydrolysable et condensable ou un groupement hydroxy et de préférence sont choisis parmi le groupe constitué par les groupements hydroxy, alcoxy, alcoxy-alkylène-oxy, amino, amido, acylamino, aminoxy, iminoxy, cétiminoxy, acyloxy et énoxy,
- les symboles R, identiques ou différents, représentent des radicaux hydrocarbonés monovalent en C₁ à C₃₀ éventuellement substitués par un ou plusieurs atomes d'halogène ou par des groupements : amino, éther, ester, époxy, mercapto ou cyano,
- le symbole n est égal à 1, 2 ou 3, de préférence égal à 2 ou 3 et lorsque Z est un groupe hydroxy alors n-1,
- le symbole x est compris entre 200 et 10000, de préférence entre 200 et 1000 et encore plus préférentiellement entre 250 et 600.

Dans les formules **(4'), (5')** et **(6')** les symboles R¹ et R sont de préférence :
- Des radicaux alkyles ayant de 1 à 20 atomes de carbone éventuellement substitués par: un ou plusieurs groupes aryles ou cycloalkyles, par un ou plusieurs atomes d'halogène ou par des groupements : amino, éther, ester, époxy, mercapto, cyano ou (poly)glycol. On peut citer par exemple les radicaux : méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- des radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- des radicaux aryles et halogénoaryles mononucléaires ayant de 6 à 13 atomes de carbone tels que les radicaux phényle, tolyle, xylyle, chlorophényle, dichlorophényle, trichlorophényle, ou
- des radicaux alcényles ayant de 2 à 8 atomes de carbone tels que les radicaux vinyle, allyle, butène-2 yle.

La viscosité dynamique à 25°C du composé organosilicié **A'** est généralement comprise entre 50 et 1 000 000 mPa.s à 25°C, de préférence entre 50 et 100000 mPa.s.

Dans le cas particulier ou le composé organosilicié **A'** est un polyorganosiloxane de formule générale **(6')** avec des symboles Z de type hydroxyle, alors le symbole n sera de préférence égal à 1. Dans ce cas, on préfère utiliser des polyorganosiloxanes alpha-oméga dihydroxylés qui sont généralement des huiles dont la viscosité dynamique à 25°C varie par exemple entre 500 mPa.s et 20000 mPa.s.

Lorsque le composé organosilicié **A'** est un polyorganosiloxane, il est avantageux d'utiliser ceux dont au moins 60 % des radicaux R et R¹ (dans les formules **4'** et **5'**) ou du radical R (dans la formule **6')** sont des radicaux méthyle, les autres radicaux étant généralement des radicaux phényle et/ou vinyle.

Selon l'invention, les symboles Z représentent chacun un groupement hydroxy ou un groupement hydrolysable et condensable qui sont de préférence choisis parmi le groupe constitué par les groupements alcoxy, alcoxy-alkylène-oxy, amino, amido, acylamino, aminoxy, iminoxy, cétiminoxy, acyloxy et énoxy.

Lorsque le composé organosilicé **A'** présente des groupements Z hydrolysables et condensables selon l'invention et est un polyorganosiloxane, on le décrit le plus souvent comme un polymère fonctionnalisé et correspond à une forme stable en l'absence d'humidité qui peut-être utilisé dans une composition mono-composante et être ainsi conditionnée en pôt, cartouche ou fût hermétiquement fermées, qui seront ouvert par l'opérateur lors de l'utilisation pour l'application sur le support à traiter. Lorsque le groupement organosilicié **A'** présente des groupements Z de type hydroxy, on peut alors les fonctionnaliser in-situ dans les compostion mono-composantes, via un catalyseur de fonctionnalisation tel que la lithine, de manière à pouvoir les stocker et les conditionner en cartouches hermétiquement fermées.

Comme exemple de groupements hydrolysables et condensables Z de type alcoxy, on peut citer les groupes ayant de 1 à 8 atomes de carbone comme les groupes méthoxy, éthoxy, n-propoxy, iso-propoxy, n-butoxy, iso-butoxy, sec-butoxy, tert-butoxy, 2-méthoxyéthoxy, hexyloxy ou octyloxy.

Comme exemple de groupements hydrolysables et condensables Z de type alcoxy-alkylène-oxy, on peut citer le groupement méthoxy-éthylène-oxy.

Comme exemple de groupements hydrolysables et condensables Z de type amino, on peut citer les groupements méthylamino, diméthylamino, éthylamino, diéthylamino, n-butylamino, sec-butylamino ou cyclohexylamino.

Comme exemple de groupements hydrolysables et condensables Z de type amido, on peut citer le groupement N-méthyl-acétamido.

Comme exemple de groupements hydrolysables et condensables Z de type acylamino, on peut citer le groupement benzoyl-amino.

Comme exemple de groupements hydrolysables et condensables Z de type aminoxy, on peut citer les groupements diméthylaminoxy, diéthylaminoxy, dioctylaminoxy ou diphénylaminoxy.

Comme exemple de groupements hydrolysables et condensables Z de type iminoxy et en particulier cétiminoxy, on peut citer les groupements dérivés des oximes suivantes : acétophénone-oxime, acétone-oxime, benzophénone-oxime, méthyl-éthyl-cétoxime, di-isopropylcétoxyme ou méthylisobutyl-cétoxime.

Comme exemple de groupements hydrolysables et condensables Z de type acyloxy, on peut citer le groupement acétoxy.

Comme exemple de groupements hydrolysables et condensables Z de type énoxy, on peut citer le groupement 2-propénoxy.

De préférence, le composé organosilicié **A'** est un polyorganosiloxane **(7')** de formule suivante : 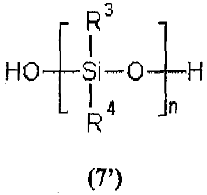 formule dans laquelle :
- le symbole n est compris entre 1 et 2000, de préférence compris entre 2 et 2000, plus préférentiellement entre 1 et 1000 et encore plus préférentiellement entre 2 et 1000,
- R³ et R⁴, identiques ou différents, représentent : un alkyle ayant de 1 à 6 atomes de carbone; un cycloalkyle ayant de 3 à 8 atomes de carbone; un aryle, un alkylarylène ou un arylalkylène.

Des exemples de polyorganosiloxanes **(7')** les plus utiles, du fait de leur disponibilité industrielle, sont ceux pour lesquels R³ et R⁴ sont indépendamment choisis dans le groupe des radicaux constitué par un méthyle, un éthyle, un propyle, un isopropyle, un cyclohexyle, un phényle, et un 3,3,3-trifluoropropyle. De manière très préférée, au moins environ 80 % en nombre de ces radicaux sont des radicaux méthyles.

De manière encore plus préférée, le polyorganosiloxane **(7')** est un polyorganosiloxane de formule **(8') :** 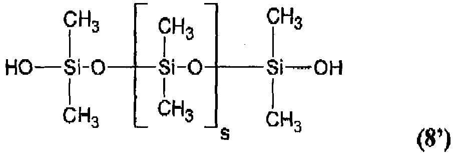 avec 1 ≤ s ≤ 4200 et de préférence 2 ≤ s ≤ 1500.

Dans le cadre de la présente invention, on peut spécialement utiliser les α,ω-bis (diméthylhydroxysilyl)polydiméthylsiloxanes préparés par le procédé de polymérisation anionique décrit dans les brevets américains US 2 891 920 et US 3 294 725.

Selon un mode de réalisation préféré, l'agent de réticulation **B'** est un composé de silicium dont chaque molécule comprend au moins trois groupements hydrolysables et condensables Y et ledit agent de réticulation **B'** ayant la formule (9') suivante :

R'₍₄₋ₐ₎SiYₐ **(9')**

formule dans laquelle :
- le symbole R' est un radical hydrocarboné monovalent comprenant de 1 à 30 atomes de carbone,
- le symbole Y est un groupement alcoxy, alcoxy-alkylène-oxy, amino, amido, acylamino, aminoxy, iminoxy, cétiminoxy, acyloxy et énoxy et de préférence Y est un groupement alcoxy, acyloxy, énoxy, cétiminoxy ou oxime,
- le symbole a = 3 ou 4.

Des exemples de groupements Y sont les mêmes que ceux citer ci-dessus lorsque le symbole Z est un groupement hydrolysable et condensable, c'est-à-dire différent d'un groupement hydroxyle.

Comme exemple d'agent de réticulation **B'** on peut citer les silanes alcoxy de formule générale **(10')** suivante et les produits d'hydrolyse partielle de ce silane :

R²ₖSi(OR³)₍₄₋ₖ₎ **(10')**

- dans laquelle :
- les symboles R², identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆,
- le symbole R³ représente un groupe hydrocarboné aliphatique saturé ou insaturé, linéaire ou ramifié, un groupe carbocyclique, saturé ou insaturé et/ou aromatique, monocyclique ou polycyclique,
- et k est égal à 0, 1 ou 2.

Comme exemple de radicaux alcoxyalkylène en C₃-C₆ on peut citer les radicaux suivante

CH₃OCH₂CH₂-

CH₃OCH₂CH(CH₃)-

CH₃OCH(CH₃)CH₂-

C₂H₅OCH₂CH₂CH₂-

Le symbole R³ représente de préférence un radical hydrocarboné en C₁-C₁₀ englobant:
- les radicaux alkyles en C₁-C₁₀ tels que les radicaux méthyle, éthyle, propyle, butyle, pentyle, éthyl-2 hexyle, octyle, décyle,
- les radicaux vinyle, allyle, et
- les radicaux cycloalkyles en C₅-C₈ tels que les radicaux phényle, tolyle et xylyle.

Ces agents de réticulation **B'** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Parmi les agents de réticulation **B',** on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Comme autres exemples d'agents de réticulation **B'** qui peuvent être utilisés, on cite plus particulièrement le polysilicate d'éthyle, le polysilicate de n-propyle et les silanes suivants: le propyltriméthoxysilane, le méthyltriméthoxysilane, l'éthyltriméthoxysilane, le vinyltriéthoxysilane, le vinyltriméthoxysilane le méthyltriéthoxysilane, le propyltriéthoxysilane, le tétraméthoxysilane, le tétraéthoxysilane, le tétrapropoxysilane, le tétrabutoxysilane le 1,2-bis(triméthoxysilyl)éthane, le 1,2-bis(triéthoxysilyl)éthane, le tétraisopropoxysilane, le phényltriéthoxysilane, le méthyltris(méthyléthyl-cétoximo)silane, le 3-cyanopropyltriméthoxysilane, le 3-cyanopropyl-triéthoxysilane, 3-(glycidyloxy)propyltriéthoxysilane, le vinyltris(méthyléthylcétoximo)silane, le tétra-kis(méthyléthylcétoximo)silane, les acyloxysilanes tels que le vinyltriacétoxysilane, le méthyltriacétoxysilane ou l'éthyltriacétoxysilane ou encore ceux de formules suivantes :

CH₃Si(OCH₃)₃ ; C₂H₅Si(OC₂H₅)₃ ; C₂H₅Si(OCH₃)₃

CH₂=CHSi(OCH₃)₃ ; CH₂=CHSi(OCH₂CH₂OCH₃)₃

C₆H₅Si(OCH₃)₃ ; [CH₃][OCH(CH₃)CH₂OCH₃]Si[OCH₃]₂

Si(OCH₃)₄; Si(OC₂H₅)₄; Si(OCH₂CH₂CH₃)₄; Si(OCH₂CH₂CH₂CH₃)₄

Si(OC₂H₄OCH₃)₄; CH₃Si(OC₂H₄OCH₃)₃; CICH₂Si(OC₂H₅)₃.

On utilise généralement de 0,1 à 60 parties en poids d'agent de réticulation **B'** pour 100 parties en poids de composé organosilicié **A'.** De préférence, on utilise de 1 à 15 parties en poids pour 100 parties en poids de composé organosilicié **A**'.

Selon un mode de réalisation particulièrement avantageux, la composition **X** comprend :
(i) au moins un composé organosilicié **A'** comprenant au moins deux groupements hydrolysables et condensables, identiques ou différent, ou au moins deux fonctions silanol ≡SiOH,
(ii) au moins un agent de réticulation **B**',
(iii) une quantité catalytiquement efficace d'au moins un catalyseur de polycondensation **C** tel que défini ci-dessus,
(iv) au moins un composé **L'** qui exsude à la surface de la couche antisalissure lorsque le réseau élastomère est formé améliorant ainsi l'effet "antisalissure",
(v) éventuellement au moins un promoteur d'adhérence **E',**
(vi) éventuellement au moins une charge minérale siliceuse, organique et/ou non siliceuse **F',**
(vii) éventuellement au moins un pigment, une base colorante ou un agent de coloration **H',** et
(viii) éventuellement au moins un solvant **K'.**

Des exemples de composés **L'** qui exsudent à la surface de la couche antisalissure lorsque le réseau élastomère est formé améliorant ainsi l'effet "antisalissure" sont par exemple les composés a), b), c), d) e), f) et g) suivants :

Les composés a) sont des huiles polyorganosiloxanes répondant à la formule générale **(II)** suivante : 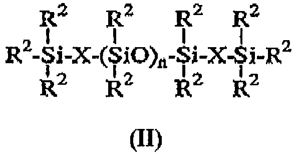 dans laquelle :
- R² est un radical alkyle, aryle ou alkényle, les radicaux méthyle et phényle sont préférés (un exemple particulièrement préféré étant une huile méthylphénylpolysiloxane telle que décrite par exemple dans le brevet US-A-4 025 693),
- X est un atome d'oxygène ou un groupe hydrocarboné divalent de 1 à 8 atome de carbone, et
- n est un nombre défini de manière à obtenir un diorganopolysiloxane ayant une viscosité comprise entre 10 et 1x10⁶ mm²/s à 25°C.

Ces huiles polyorganosiloxanes peuvent éventuellement être greffées et comprendre des groupements acrylique, amide, aminé, carbonyle, carboxyliques, carboxylates, thiol, thioether, urée, ammonium quaternaire, fluoroalkyl ou perfluoroalkyl. Des huiles polydiméthylsiloxane greffés ou séquencées comprenant au moins un bloc polyéther (avec par exemple des groupements polyéthylène glycol et/ou polypropylène glycol) peuvent également être employées.

Le composé b) est un composé liquide hydrocarboné : par exemple une polyoléfine tel qu'un co-polymère ethylène\propylène et en particulier un polyisobutene de faible poids moléculaire (jusqu'à 5000 g/mol et de préférence entre 300 et 500 g/mol).

Le composé c) est un composé liquide organique choisi parmi les polydiènes, les polyesters, les polyisocyanates, les polyuréthanes, les polyépoxides, les fluoroalkyles, les fluoroethers, les huiles lubrifiantes (voir par exemple le brevet (FR-A-2 375 305), des plastifiants (par exemple des esters d'acide gras qui peuvent éventuellement être substitués par des hétéroatomes ou des des esters d'acide phosphorique ou des composés halohydrocarbonés). Les polyéthylènes glycols, les polypropylènes glycol ou l'huile de castor peuvent également être utilisés et ils amènent également des propriétés anti-coulures lors de l'application de la composition.

Les composés d) sont des paraffines liquides et des masses cireuses du type pétrolatum (JP-A-83/013 673).

Le composé e) est un polymère thermoplastique tel que du PVC.

Le composé f) est un copolymère chlorure de vinyle/acétate de vinyle (KOKAI JF-A-79/026 826),

Les composés g) sont des tensio-actifs cationiques, anioniques, non-ioniques, amphotères (JP-A-85/258 271).

Comme exemple de promoteur d'adhérence **E'** on peut citer par exemple les composés organosiliciques portant à la fois :
- un ou des groupes hydrolysables liés à l'atome de silicium, et
- un ou des groupes organiques substitués par des radicaux comprenant un atome d'azote ou choisis dans le groupe des radicaux (méth)acrylate, époxy, et alcényle, et plus préférentiellement encore dans le groupe constitué par les composés suivants pris seul ou en mélange :
   - vinyltriméthoxysilane (VTMO),
   - 3-glycidoxypropyl-triméthoxysilane (GLYMO),
   - méthacryloxypropyltriméthoxysilane (MEMO),
   - [H₂N(CH₂)₃]Si(OCH₂CH₂CH₃)₃,
   - [H₂N(CH₂)₃]Si(OCH₃)₃
   - [H₂N(CH₂)₃]Si(OC₂H₅)₃
   - [H₂N(CH₂)₄]Si(OCH₃)₃
   - [H₂NCH₂CH(CH₃)CH₂CH₂]SiCH₃(OCH₃)₂
   - [H₂NCH₂]Si(OCH₃)₃
   - [n-C₄H₉-HN-CH₂]Si(OCH₃)₃
   - [H₂N(CH₂)₂NH(CH₂)₃]Si(OCH₃)₃
   - [H₂N(CH₂)₂NH(CH₂)₃]Si(OCH₂CH₂OCH₃)₃
   - [CH₃NH(CH₂)₂NH(CH₂)₃]Si(OCH₃)₃
   - [H₂N(NHCH₂CH₂)₂NH(CH₂)₃]Si(OCH₃)₃

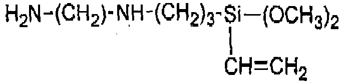

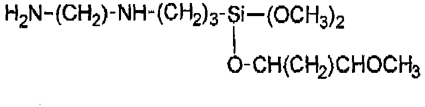

L'agent promoteur d'adhérence E peut être présent dans la composition silicone selon l'invention en une quantité comprise entre 0% et 20% en poids, de préférence entre 1% et 20% en poids, par rapport au poids du composé organosilicié **A'.**

Comme exemple de minérale siliceuse, organique et/ou non siliceuse **F'** on peut citer des produits très finement divisés dont le diamètre particulaire moyen est inférieur à 0,1 µm. Parmi ces charges figurent les silices de combustion et les silices de précipitation ; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g. Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différents ; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g. L'introduction des charges a pour but de conférer de bonnes caractéristiques mécaniques et rhéologiques aux élastomères découlant du durcissement des compositions conformes à l'invention.

Les compositions selon l'invention peuvent en outre avantageusement comprendre au moins une résine silicone **(J').** Ces résines silicones sont des polymères organopolysiloxanes ramifiés bien connus et disponibles dans le commerce. Elles présentent, par molécule, au moins deux motifs différents choisis parmi ceux de formule R'''₃SiO_{1/2} (motif M), R'''₂SiO_{2/2} (motif D), R'''SiO_{3/2} (motif T) et SiO_{4/2} (motif Q) avec au moins un des motifs étant un motif T ou Q. Les radicaux R''' sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme exemples de radicaux R alkyles : un méthyle, un éthyle, un isopropyle, un tertiobutyle et un n-hexyle. Ces résines sont de préférence hydroxylées et ont dans ce cas une teneur pondérale en groupe hydroxyle comprise entre 5 et 500 meq/100 g. Comme exemple de résines, on peut citer les résines MQ, les résines MDQ, les résines TD et les résines MDT.

La composition **X** selon l'invention peut aussi comprendre un pigment, une base colorante ou un agent de coloration **H**'. Des exemples de pigments **H**' sont à titre indicatif: l'oxyde de fer rouge, l'oxyde de zinc, le noir de carbone, le graphite, l'oxyde de fer jaune, le blanc d'oxyde de titane, l'oxyde de chrome, l'oxyde de cobalt,, la litharge, l'outremer et le rouge et le jaune de molybdène, ou des pigments organiques connus et largement utilisés dans le domaine des peintures aquatiques. D'autres agents auxiliaires et additifs usuels (thixotropants, anti-coulures,...) peuvent être incorporés à la composition selon l'invention.

Outre les constituants principaux, la composition **X** peut comprendre des polymères polyorganosiloxanes linéaires non réactifs **(G')** qui peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactifs **(G')** sont bien connus; ils comprennent plus spécialement: des polymères α,ω-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties en poids, de préférence de 5 à 20 parties en poids pour 100 parties en poids du composé organosilicié **A**'.

Des exemples de solvants **K**' sont par exemple : des dérivés hydrocarbonés aliphatique cycloaliphatique ou aromatiques tels que le white spirit, le cyclohexane, le toluene, l'octaméthyltrisiloxane, le xylène et les solvants ester tels que le méthoxypropylacétate, le n-butyl acétate et le 2-éthoxyéthylacetate, l'acétone, l'acétonitrile, ainsi que leurs mélanges. La quantité de solvant est déterminée suivant l'application ou le support à traiter de manière à obtenir une peinture de viscosité acceptable.

D'autres agents auxiliaires et additifs usuels peuvent être incorporés à la composition selon l'invention ; ceux-ci sont choisis en fonction des applications dans lesquelles sont utilisées lesdites compositions.

Les compositions selon l'invention peuvent être :
- mono-composantes ou RTV-1, c'est-à-dire conditionnées en un seul emballage hermétique à l'air, et stables au stockage en l'absence d'humidité, ou
- bi-composantes ou RTV-2, c'est-à-dire conditionnées en deux emballages et les composants de la composition sont séparés en deux fractions séparées, qui durcissent dès qu'elles sont réunies en présence d'humidité de l'air.

Des bases mono-composantes sont décrites en détail par exemple dans les brevets EP 141 685, EP 147 323, EP 102 268, EP 21 859, FR 2 121 289 et FR 2 121 631, cités en référence.

Des bases bi-composantes sont décrites en détail par exemple dans les brevets EP 118 325, EP 117 772, EP 10 478, EP 50 358, EP 184 966, US 3 801 572 et US 3 888 815, cités comme référence.

Une composition bi-composante RTV-2, précurseur de la composition **X** selon l'invention, peut se présenter en deux emballages distincts **P1** étanche à l'air et **P2** caractérisé en ce que :
- l'emballage **P1** comprend :
- une quantité catalytiquement efficace d'au moins un catalyseur de polycondensation **M'** selon l'invention et tel que défini ci-dessus, et
- au moins un agent de réticulation **B'** et de préférence tel que défini ci-dessus, et
- l'emballage **P2** ne contient pas ledit catalyseur de polycondensation **C** et ledit agent de réticulation **B'** et comprend :
- pour 100 parties en poids d'au moins un composé organosilicié **A'** qui est de préférence un polydiméthylsiloxane α,ω-dihydroxylée dont la viscosité est comprise entre 500 mPa.s et 100000 mPa.s et de préférence entre 1000 mPa.s et 10000 mPa., et
- de 0 à 10 partie(s) en poids d'eau.

Un des avantages de ces nouvelles compositions RTV-2 selon l'invention par rapport aux RTV-2 classiques de polycondensation utilisant des catalyseurs de dicarboxylate de dialkyl étain est qu'il n'est plus nécessaire d'ajouter de l'eau dans la partie **P2** car le catalyseur selon l'invention n'a pas besoin d'être activé simplifiant ainsi la formulation.

Tout matériau qui est utilisé dans un environnement aquatique et qui est sujet aux souillures, peut être un support **(1)** pour la présente invention. Des supports possibles sont les matériaux de construction des bateaux, tels que l'acier, l'aluminium, le bois, les fibres de verre imprégnées de résine et n'importe quel autre matériau composite. Les matériaux utilisés pour les canalisations, tels que le béton, les matières plastiques, l'acier, le fer et d'autres métaux, peuvent également être revêtus. Les bassins contenant de l'eau, y compris les piscines, sont sujets aux souillures. Les matériaux utilisés pour la fabrication des bassins sont identiques ou semblables à ceux utilisés pour la fabrication des canalisations.

Lorsque l'on met en oeuvre une couche antisalissure **(4)** (ou "top coat") selon l'invention on peut lui associer une couche **(3)** favorisant l'adhérence (ou "tie coat") de nature diverse et variée. Par exemple, elle peut être en polyuréthanne, en caoutchouc naturel ou synthétique éventuellement chloré, tels que le chloroprène et le néoprène, en caoutchouc butyral/silicone (KOKAI JP-A-78/137 231, JP-A-78/137 233 et JP-A-78/137 234). Suivant une autre approche, par exemple décrite dans le brevet US-5,449,553, un « tie coat » est décrit et est préparé à partir d'un composition durcissable à l'humidité de l'air comprenant un catalyseur de polycondensation à base d'étain, un réticulant tel que le silicate d'éthyle et un co-polymère issu du produit de réaction d'un organopolysiloxane à terminaison silylhydroxy avec un monomère polymérisable tels qu'un styrène ou une dioléfine conjuguée comme par exemple le 1,3-butadiène. Suivant un autre exemple décrit dans le brevet EP-1670866, un « tie coat » est formé à partir d'une composition comprenant :
(i) de 0 à 60 % en poids humide de pigments et de charges ; et
(ii) le complément étant une phase à base de liant comprenant :
   - de 1 à 90 % en poids humide d'un ou de plusieurs polysiloxanes à fonction amine,
   - de 1 à 90 % en poids humide d'un ou de plusieurs de polysiloxanes à fonction époxy, et
   - de 0 à 20 % en poids humide d'un promoteur d'adhésion choisi dans le groupe constitué par les polysiloxanes à fonction hydroxyle, les polysiloxanes à fonction hydroxyalkyle et les polysiloxanes à fonction alcoxy en C₁-C₄.

L'invention concerne aussi un procédé d'application d'une couche antisalissure **(4)** sur un support **(1)** destiné à être utilisé dans des applications aquatiques comprenant les étapes suivantes :
a) sur ledit support **(1)** il est éventuellement déposé au moins une couche primaire **(2)** comprenant au moins un produit anticorrosif,
b) une couche **(3)** favorisant l'adhérence est déposée sur ladite couche primaire **(2)** ou sur ledit support **(1)** lorsque la couche primaire **(2)** est absente,
c) ladite couche **(3)** favorisant l'adhérence est durcie,
d) une couche antisalissure **(4)** est déposée sur ladite couche **(3)** favorisant l'adhérence, et
e) ladite couche antisalissure **(4)** est durcie au contact de l'humidité de l'air, et
   - ledit procédé étant caractérisé en ce que la couche antisalissure **(4)** et éventuellement la couche **(3)** favorisant l'adhérence sont préparées à partir de la composition **X** selon l'invention et telle que définie ci-dessus.

L'épaisseur des couches appliquées peut varier et des pellicules de 12 à 1000 microns d'épaisseur (sous condition d'un dépôt homogène) ont donné de bons résultats. L'épaisseur type des différentes couches est d'environ 50 µm pour le primaire, 150 µm pour le «tie coat » et 150 µm pour le « top coat ». Bien entendu, l'Homme de l'Art saura adapter l'épaisseur des différentes couches en fonction du résultat désiré.

Le dernier objet de l'invention concerne une utilisation de la composition **X** selon l'invention et telle que définie ci-dessus pour former après durcissement au contact de l'humidité de l'air une couche antisalissure **(4)** sur un article afin de le protéger contre l'adhésion d'organismes aquatiques.

Ainsi, la composition **X** selon l'invention peut-être utilisée comme peinture dite « fouling-release coating », qui après durcissement grâce à l'humidité de l'air ou par ajoût d'eau confèrent à la surface du support traité des propriétés ultra-lissantes, avec de faibles forces de frictions et de faibles énergies de surface. Ce sont ces propriétés physiques qui empêchent les salissures d'adhérer.

D'autres avantages et caractéristiques de la présente invention apparaîtront à la lecture des exemples suivants donnés à titre illustratif nullement limitatif.

### EXEMPLES

### Notation :

- OsBu : sec-butanolate
- OnBu : n-butanolate
- OtBu : tert-butanolate
- OBO : 2-butyloctanolate
- OC₄H₉ : butanolate (mélange de composés linéaires et ramifiés)
- OEH : 2-éthythexanolate
- OEt : éthanolate
- OiPr : iso-propanolate
- OnPr : n-propanolate
- OPr2Me : 2-méthylpropan-1-olate
- EAA : acétoacétate d'éthyle
- EEA : éthyl acétate d'éthyle
- EPA : propionyl acétate d'éthyle
- E2EA : 2-éthyl acétoacétate d'éthyle
- F.EEA : trifluoro acétoacétate d'éthyle
- t.EAA : t-butyl acétatoacétate d'éthyle
- C4EA : cyclopropyl acétoacétate d'éthyle
- PrOH : propanol
- PAA : acétoacétonate de propyle
- EPAA : propionyl acétoacétate d'éthyle
- acac : acétylacétone
- F.acac.F : hexafluoroacétylacétone
- Ph.acac.F : 4,4,4-trifluoro-1-phényl-1,3-butanedione
- Ph.acac.Ph : 1,3-diphényl-1,3-propanedione
- t.acac : 2,2,6,6-tétraméthyl-3,5-heptanedione
- diPrm : diisopropylmalonate
- Aamid : acétoacétamide
- NacNac : bis-N,N'-(2-phenylethyl)-2,4-diiminopentane
- MA : acrylate de méthyle
- DBU : 1,8-diazabicyclo(5.4.0)undée-7-ène

### Exemple 1 : Synthèse et analyse du complexe alcoxyde hétérométallique AlTi(OsBu)₃(OnBu)₄

Les alcoxydes monométalliques Al(OsBu)₃ et Ti(OnBu)₄ ont été commandés chez Sigma-Aldrich et ont été utilisés dès réception.

Al(OsBu)₃ et Ti(OnBu)₄ ont été mélangées dans les proportions molaires de 1 mole pour 1 mole et agités pendant 2 heures à température ambiante. L'huile obtenue quantitativement a ensuite été caractérisée par infrarouge.

On a constaté dans le spectre du complexe hétérométallique l'apparition de deux nouvelles bandes très intenses à 1035,8 cm⁻¹ et 996,2 cm⁻¹, qui correspondent aux vibrations des liaisons C-O dans l'enchainement Al-C-O-C-Ti. Les bandes à 611,7 cm⁻¹ et à 515,2 cm⁻¹, également très intenses, correspondent aux vibrations des liaisons métal-O dans l'enchaînement Al-O-Ti. Les autres bandes d'intensité moyenne ou faible correspondent aux bandes visibles dans les produits de départ, mais avec des fréquences de résonnante différentes. Ces modifications montrent bien un nouvel environnement chimique autour des métaux Al et Ti, et donc la création d'une nouvelle espèce chimique.

### Exemple 2 : Synthèse de complexes alcoxydes hétérométalliques

Une série de complexes alcoxydes hétérométalliques a été préparée selon la méthode suivante :

Les alcoxydes monométallique d'aluminium Al(OnBu)₃, Al(OsBu)₃, Al(OBO)₃, Al(OiPr)₃, Al(OEH)₃, de magnésium Mg(OEt)₂, Mg(OBO)₂, de zirconium Zr(OnBu)₄, Zr(OBO)₄, Zr(OnBu)₄, Zr(OnPr)₄, Zr(OEH)4, Zr(OEt)₄ et de titane Ti(OBO)₄, Ti(OnBu)₄, Ti(OiPr)₄ et Ti(OEH)₄. proviennent de Sigma-Aldrich et ont été utilisés dès réception ou concentrés sous pression réduite.

Les espèces alcoxydes monométalliques sélectionnées en fonction du complexe désiré ont été mélangées dans les proportions molaires souhaitées et agitées pendant 2 heures à température ambiante. Une huile a été obtenue quantitativement.

Ci-dessous est donnée la liste des complexes hétérométalliques synthétisés. Les formules générales indiquées représentent la composition du complexe et les rapports molaires entre les différents atomes ou groupements atomiques tels qu'ils devraient être d'après la composition du milieu réactionnel et en supposant que les réactions sont totales. Un homme du métier comprendra bien sûr que les produits réactionnels obtenus peuvent s'écarter de ces formules générales.

Complexes aluminium-zirconium :
- AlZr(OnBu)₇
- AlZr(OBO)₇
- AlZr(OsBu)₃(OnBu)₄
- Al_{0,1}Zr(OsBu)_{0,3}(OnBu)₄
- Al_{0,2}Zr(OsBu)_{0,6}(OnBu)₄
- Al_{0,3}Zr(OsBu)_{0,9}(OnBu)₄
- Al_{0,4}Zr(OsBu)_{1,2}(OnBu)₄
- Al_{0,5}Zr(OsBu)_{1,5}(OnBu)₄
- Al_{0,6}Zr(OsBu)_{1,8}(OnBu)₄
- Al_{0,7}Zr(OsBu)_{2,1}(OnBu)₄
- Al_{0,8}Zr(OsBu)_{2,4}(OnBu)₄
- Al_{0,9}Zr(OsBu)_{2,7}(OnBu)₄
- Al_{1,1}Zr(OsBu)_{3,3}(OnBu)₄
- Al_{1,2}Zr(OsBu)_{3,6}(OnBu)₄
- Al_{1,3}Zr(OsBu)_{3,9}(OnBU)₄
- Al₁,₄Zr(OsBu)_{4,2}(OnBu)₄
- Al_{1,5}Zr(OsBu)_{4,5}(OnBu)₄
- Al_{1,6}Zr(OsBu)_{4,8}(OnBu)₄
- Al_{1,7}Zr(OsBu)_{5,1}(OnBu)₄
- Al_{1,8}Zr(OsBu)_{5,4}(OnBu)₄
- Al_{1.9}Zr(OsBu)_{5,7}(OnBu)₄
- AlZr_{0,1}(OsBu)₃(OnBu)_{0,4}
- AlZr_{0,2}(OsBu)₃(OnBu)_{0,8}
- AlZr_{0,3}(OsBu)₃(OnBu)_{1,2}
- AlZr_{0,4}(OsBu)₃(OnBu)_{1,6}
- AlZr_{0,5}(OsBu)₃(OnBu)₂
- AlZr_{0,6}(OsBu)₃(OnBu)_{2,4}
- AlZr_{0,7}(OsBu)₃(OnBu)_{2,8}
- AlZr_{0,8}(OsBu)₃(OnBu)_{3,2}
- AlZr_{0,9}(OsBu)₃(OnBu)_{3,6}
- Al₂Zr(OnPr)₄(OiPr)₆
- Al₂Zr(OnBu)₁₀
- Al₂Zr(OnBu)₄(OsBu)₆
- Al₂Zr(OEH))₁₀
- AlZr₂(OnBu)₁₁

Complexes magnésium-zirconium :
- MgZr(OEt)₆
- MgZr(OBO)6
- Mg₂Zr(OEt)₈
- Mg₃Zr(OEt)₁₀
- Mg₄Zr(OEt)₁₂
- MgZr₂(OEt)₁₁

Complexes aluminium-titane :
- AlTi(OBO)₇
- AlTi(OsBu)₃(OnBu)₄
- Al_{0,1}Ti(OsBu)_{0,3}(OnBu)₄
- Al_{0,2}Ti(OsBu)_{0,6}(OnBu)₄
- Al_{0,3}Ti(OsBu)_{0,9}(OnBu)₄
- Al_{0,4}Ti(OsBu)_{1,2}(OnBu)₄
- Al_{0,5}Ti(OsBu)_{1,5}(OnBu)₄
- Al_{0,6}Ti(OsBu)_{1,8}(OnBu)₄
- Al_{0,7}Ti(OsBu)_{2,1}(OnBu)₄
- Al_{0,8}Ti(OsBu)_{2,4}(OnBu)₄
- Al_{0,9}Ti(OsBu)_{2,7}(OnBu)₄
- Al_{1,1}Ti(OsBu)_{3,3}(OnBu)₄
- Al_{1,2}Ti(OsBu)_{3,6}(OnBu)₄
- Al_{1,3}Ti(OsBu)_{3,9}(OnBu)₄
- Al_{1,4}Ti(OsBu)_{4,2}(OnBu)₄
- Al_{1,5}Ti(OsBu)_{4,5}(OnBu)₄
- Al_{1,6}Ti(OsBu)_{4,8}(OnBu)₄
- AL_{1,7}Ti(OsBu)_{5,1}(OnBu)₄
- Ali_{1,8}Ti(OsBu)_{5,4}(OnBu)₄
- Al_{1,9}Ti(OsBu)_{5,7}(OnBu)₄
- AlTi_{0,1}(OsBu)₃(OnBu)_{0,4}
- AlTi_{0,2}(OsBu)₃(OnBu)_{0,8}
- AlTi_{0,3}(OsBu)₃(OnBu)_{1,2}
- AlTi_{0,4}(OsBu)₃(OnBu)_{1,6}
- AlTi_{0.5}(OsBu)₃(OnBu)_{2,0}
- AlTi_{0,6}(OsBu)₃(OnBu)_{2,4}
- AlTi_{0,7}(OsBu)₃(OnBu)_{2,8}
- AlTi_{0,8}(OsBu)₃(OnBu)_{3,2}
- AlTi_{0,9}(OsBu)₃(OnBu)_{3,6}
- Al₂Ti(OiPr)₁₀
- Al₂Ti(OnBu)₁₀
- Al₂Ti(OEH)₁₀
- De plus, les complexes commerciaux ci-dessous ont été utilisés :
- Complexe aluminium-zirconium : Al₂Zr(OC₄H₉)₁₀
- Complexe magnésium-zirconium : MgZr(OC₄H₉)₆
- Complexe aluminium-titane : Al₂Ti(OC₄H₉)₁₀
- Complexe magnésium-titane : MgTi(OC₄H₉)₆

### Exemple 3 : Synthèse de complexes chélatés hétérométalliques

Les alcoxydes monométalliques Mg(OEt), Al(OiPr)₃, Al(OsBu)₃, Zr(OnPr)₄, Zr(OnBu)₄, Zr(OnBu)₂(acac)₂, Zr(acac)₄, Ti(OiPr)₄, Ti(OnBu)₄ et Ti(EAA)₂(OPr2Me)₂ proviennent de Sigma-Aldrich et ont été utilisés dès réception ou concentrés sous pression réduite.

Des complexes chélatés monométalliques Mg(EAA)₂, Al(OsBu)₂(EAA)₂, Al(EAA)₃, Zr(OnPr)₂(EAA)₂, Zr(OnPr)₂(EEA)₂, Al(OnPr)₂(EEA)₂, Al(OnPr)₂(EPA)₂, Zr(OnPr)₂(E2EA)₂, Zr(OnPr)₂(F.EEA)₂, Zr(OnPr)₂(t.EAA)₂, Zr(OnPr)₂(C4EA)₂, Zr(OnPr)(EAA)₃, Zr(OnPr)(EPAA)₃, Zr(EAA)₄.PrOH, Zr(PAA)₄.PrOH, Zr(EPAA)₄.EPAA, Zr(OnPr)₂(acac)₂, Zr(OnPr)₂(F.acac.F)₂, Zr(OnPr)₂(Ph.acac.F)₂, Zr(OnPr)₂(Ph.acac.Ph)₂, Zr(OnPr)₂(t.acac)₂, Zr(OnPr)₂(diPrm)₂, Zr(diPrm)₄, Zr(OnPr)₂(Aamid)₂, Zr(OnPr)₂(NacNac)₂, Zr(OnPr)₂(MA)₂, Zr(OnPr)₂(DBU)₂.PrOH et Ti(EAA)₂(OiPr)₂ ont été préparés selon la méthode suivante :
1 équivalent du complexe alcoxyde monométallique correspondant a été dilué dans du toluène. Puis 1, 2, 3 ou 4 équivalents de ligand correspondant ont été ajoutés au mélange précédent. La solution est ensuite chauffée à 140°C pour ensuite distiller le mélange azéotropique formé par l'alcool libéré et le toluène. Le solvant résiduel a été évaporé.

Les complexes chélatés hétérométalliques ont été préparés selon 3 voies de synthèses.

### - Voie 1 : Association d'un complexe alcoxyde monométallique avec un complexe chélaté monométallique

AlTi(EAA)₃(OnBu)₄ a été préparé en mélangeant 1 mole de Al(EAA)₃ avec 1 mole de Ti(OnBu)₄. Le mélange a été agité pendant 2 heures à température ambiante. Lorsque des difficultés de solubilité persistaient, le mélange a été chauffé à 65°C.

Les complexes AlZr(EAA)₃(OnPr)₄, AlZr(EAA)₇, AlZr_{0,5}(EAA)₅, Al₂Zr(EAA)₁₀, AlZr(OsBu)₃(OnPr)₄(diPrm)₂, MgZr(EAA)₆, , MgTi(EAA)₄(OiPr)₂ ont été préparés de la même manière avec les complexes de départ correspondants dans les proportions correspondantes.

### - Voie 2 : Echange de ligands

AlZr(EAA)₇ a été préparé à partir de 4 g de AlZr(OnBu)₇ dilués dans 15 mL de toluène. 7 équivalents d'acétoacétonate d'éthyle ont ensuite été ajoutés au mélange précédent qui a été chauffé à 130°C. Puis le mélange azéotropique formé par le butanol libéré et le toluène a été distillé et le solvant résiduel a été évaporé.

### - Voie 3 : Synthèse monotope (« one pot »)

AlZr(EAA)₃(OnPr)₄, AlZr(EAA)₃(OnBu)₄, AlZr(OiPr)₅(PAA)₂, AlTi(EAA)₃(OnBu)₄ et AlTi(PAA)₂(OiPr)₅ et Al₂Zr(EAA)₆(OnPr)₄ ont été synthétisés en un seul pot. Pour cela, 2 ou 3 équivalents d'acétoacétonate d'éthyle ou d'acétoacétonate de propyle ont été ajoutés à un équivalent de Zr(OnBu)₄, de Ti(OnBu)₄ ou d'Al(OiPr)₃. Le mélange a été immédiatement chauffé à 70°C jusqu'à l'obtention d'un mélange homogène qui a été concentré sous pression réduite pour libérer le n-butanol ou l'iso-propanol. Après cela, un équivalent d'Al(OiPr)₃, de Zr(OnBu)₄, de Ti(OnBu)₄ ou de Zr(OnPr)₄ a été directement ajouté et, après 2 heures d'agitation à température ambiante, les complexes hétérométalliques désirés ont été obtenus sous forme d'huile jaune clair.

### Exemple 4 : Propriétés catalytiques des complexes hétérométalliques

Pour tester les propriétés catalytiques des complexes métalliques, des compositions d'empâtage ont été préparées. Pour cela, 3464 g d'une huile α,ω-hydroxy-polydiméthylsiloxane de viscosité 20 000 mPa.s ont été mélangés avec 120 g de vinyltriméthoxysilane (VTMO). 16 g de lithine diluée à 0,4% en poids dans du méthanol ont été ensuite ajoutés au mélange formé. Après 5 minutes d'agitation, 400 g de silice de pyrogénation AE55 ont été ajoutés. Le mélange a été concentré sous pression réduite puis stocké en cartouche fermée à l'abri de l'humidité.

Pour chaque test, 25 g de cet empâtage et une quantité de catalyseur ont été mélangés à l'aide d'un speed-mixer (2 fois 20 seconde à 2000 tr/min). L'activité catalytique de chaque composition a ensuite été évaluée par la prise de plusieurs mesures dans des conditions de température et d'hygrométrie constante (23°C à 50%) :
- Le temps de formation de peau (TFP) : temps au bout duquel on observe une réticulation de surface. Il est fait avec un bâton de hêtre sur un film d'une épaisseur de 2 mm.
- La dureté (en shore A) : elle traduit la formation du réseau tridimensionnel. Elle a été mesurée d'une part sur la superposition de 3 cordons de 2 mm d'épaisseur, et d'autre part sur un seul cordon de 6 mm d'épaisseur, sur des temps croissants (5h, 1 et 7 jours). Sur le cordon de 6 mm d'épaisseur, deux mesures ont été prises : « > » correspond à la dureté sur la partie supérieure du cordon et « < » correspond à la partie inférieur ou confinée du cordon. « NR » signifie non réticulés, « ND » signifie non démoulable, « D » signifie démoulable et « C » signifie collant. Ces lettres ont été utilisées lorsque la dureté était inférieure à 5.

Les données non déterminées sont notées « n.d ».

Les tests ont été menés sur des catalyseurs hétérométalliques selon l'invention et sur des catalyseurs de l'art antérieur :
- le dilaurate de dibutyl-étain (DBTDL)
- le tétrabutoxytitane Ti(OnBu)₄
- le tri(sec-butoxy)aluminium Al(OsBu)₃
- le tétrapropoxyzirconium Zr(OnPr)₄

Les résultats des catalyseurs de type alcoxydes en quantités équimolaires sont présentés dans le Tableau 1 suivant.

### Tableau 1 :

**Tableau 1**

| | **Catalyseurs** | **mmol/ OH** | **% en pds** | **TFP** | **DSA 5h** | **DSA 1j** | **DSA7j** | |
|---|---|---|---|---|---|---|---|---|
| | | | | **2 mm** | **3 × 2 mm** | | **6 mm** | |
| | | | | | | | **<** | **>** |
| catalyseurs de référence | DLDBE | 2,1 | 2,7% | 8 min | D | 26 | 33 | 30 |
| | Ti(OnBu)₄ | 2,1 | 1,4% | 15 min | 20 | 29 | 30 | 25 |
| | Al(OsBu)₃ | 2,1 | 1,0% | NR | NR | NR | NR | |
| | Zr(OnPr)₄ | 2,1 | 1,4% | n.d. | ND | ND | 18 | 19 |
| Ex. 1 | AlZr(OsBu)₃(OBu)₄ | 2,1 | 2,6% | n.d. | 26 | 27 | 30 | 25 |
| Ex. 2 | Al_{1,4}Zr(OsBu)_{4,2}(OnBu)₄ | 2,1 | 2,9% | 5 min | 10 | 23 | 30 | 25 |
| Ex. 3 | Al₂Zr(OC₄H₉)₁₀ | 2,1 | 3,3% | 5 min | 19 | 29 | 29 | 24 |
| Ex. 4 | AlTi(OsBu)₃(OnBu)₄ | 2,1 | 2,5% | n.d. | 28 | 33 | 33 | 28 |
| Ex. 5 | Al_{0,5}Ti(OsBu)_{1,5}(OnBu)₄ | 2,1 | 1,9% | 8 min | 22 | 28 | 32 | 26 |
| Ex. 6 | Al₂Ti(OC₄H₉)₁₀ | 2,1 | 3,2% | 10 min | 25 | 28 | 31 | 26 |
| Ex. 7 | AlTi_{0,2}(OsBu)₃(OnBu)_{0,8} | 2,1 | 1,3% | 8 min | 14 | 29 | 30 | 28 |

Les résultats des catalyseurs de type chélates mixtes en quantités équimolaires sont présentés dans le Tableau 2 :

**Tableau 2**

| | **Catalyseurs** | **mmol/ OH** | **%en pds** | **TFP** | **DSA 5h** | **DSA 1j** | **DSA7j** | |
|---|---|---|---|---|---|---|---|---|
| | | | | **2mm** | **3 × 2 mm** | | **6mm** | |
| | | | | | | | **<** | **>** |
| catalyseurs de référence | DLDBE | 2,1 | 2,7% | 8 min | D | 26 | 33 | 30 |
| | Ti(OnBu)₄ | 2,1 | 1,4% | 15 min | 20 | 29 | 30 | 25 |
| | Al(OsBu)₃ | 2,1 | 1,0% | NR | NR | NR | NR | |
| | Zr(OnPr)₄ | 2,1 | 1,4% | n.d. | ND | ND | 18 | 19 |
| Ex. 8 | AlZr(EAA)₇ | 2,1 | 4,3% | 6 min | 25 | 31 | 31 | 29 |
| Ex. 9 | AlZr(OsBu)₃(OnPr)₄(diPrm)₂ | 2,1 | 3,7% | 10 min | 16 | 29 | 30 | 26 |
| Ex. 10 | AlTi(OiPr)₃(PAA)₂ | 2,1 | 2,0% | 6 min | 26 | 26 | 32 | 24 |

Les complexes hétérométalliques conduisent rapidement, en moins de 15 minutes, à des élastomères aussi durs que ceux obtenus avec des catalyseurs de référence tels que le dilaurate de dibutylétain (DBTDL) et le tétrabutoxytitane Ti(OnBu)₄.

### Exemple 5 : Comparaison complexes monométalliques/hétérométalliques

L'activité catalytique des complexes hétérométalliques selon l'invention a été comparée à l'activité catalytique des mélanges des complexes monométalliques.

Pour cela, des empâtages ont été préparés comme décrit dans l'exemple 4, puis mélangés d'une part avec un complexe hétérométallique selon l'invention et d'autre part avec le mélange in situ correspondant de deux complexes monométalliques.

Les résultats sont présentés dans le Tableau 3 :

**Tableau 3**

| | **Catalyseurs** | **mmol/ OH** | **% en pds** | **TFP** | **DSA 5h** | **DSA 1j** | **DSA 7j** | |
|---|---|---|---|---|---|---|---|---|
| | | | | **2 mm** | **3 × 2 mm** | | **6 mm** | |
| | | | | | | | **<** | **>** |
| Ex. 11 | AlZr(OsBu)₃(OnBu)₄ | 1,6 | 2,0% | 8 min | 3 | 13 | 26 | 20 |
| comparatif | Al(OsBu)₃ | 1,6 | 1,2% | 12 min | 5 | 7 | 20 | 15 |
| | Zr(OnBu)₄ | 1,6 | 0,8% | | | | | |
| Ex. 12 | AlTi(OsBu)₃(OnBu)₄ | 1,7 | 2,0% | 10 min | 17 | 27 | 31 | 25 |
| comparatif | Al(OsBu)₃ | 1,7 | 1,2% | 7 min | 16 | 27 | 30 | 22 |
| | Ti(OnBu)₄ | 1,7 | 0,8% | | | | | |
| Ex. 13 | AlZr(EAA)₃(OnPr)₄ | 1,3 | 2,0% | 8 min | 14 | 27 | 32 | 27 |
| comparatif | Al(EAA)₃ | 1,3 | 1,1% | 24 min | ND | ND | 17 | 15 |
| | Zr(OnPr)₄ Zr(OnPr)₄ | 1,3 | 0,9% | | | | | |
| Ex. 14 | AlTi(EAA)₃(OnBu)₄ | 1,3 | 2,0% | 7 min | 21 | 29 | 34 | 28 |
| comparatif | Al(EAA)₃ | 1,3 | 1,1% | 20 min | 5 | 20 | 29 | 26 |
| | Ti(OnBu)₄ | 1,3 | 0,9% | | | | | |

On observe une meilleure réactivité des catalyseurs hétérométalliques préformés par rapport aux alcoxydes monométallique ajoutés in situ lors du test. On pense que, lors de la mise en contact in situ des complexes, aucune réaction d'association des complexes n'est possible puisqu'ils sont présents dans un milieu fortement dilué. La différence de dureté s'explique également par la formation de nouvelles espèces conduisant à une nouvelle réactivité par rapport aux espèces monométalliques. Ainsi, il est nécessaire de préformer le complexe hétérométallique avant son ajout dans la composition silicone.

On constate par ailleurs que les compositions contenant un catalyseur à base de zirconium, notamment les complexes Al-Zr, restent translucides même après un vieillissement accéléré (films de 2 mm placés 7 jours à 100°C).

On remarque également que les compositions contenant un catalyseur chélaté hetérométallique sont plus stables après un vieillissement accéléré (cartouches placées 3 semaines à 50°C) que celles contenant un catalyseur alcoxyde hétérométallique.

### Exempte 6 : Comportement en présence d'un agent promoteur d'adhérence

Des empâtages ont été préparés comme décrit dans l'exemple 4 avec en outre 1% en poids d'un silane aminé (3-(2-aminoéthylamino)propyl-diméthoxyméthylsilane) utilisé classiquement comme agent promoteur d'adhérence. Ces empâtages ont été mélangés avec un catalyseur et l'activité catalytique de chaque composition a ensuite été évaluée comme dans l'exemple 3.

Les résultats des tests des catalyseurs alcoxydes en présence de promoteur d'adhérence sont présentés dans le tableau 4 :

**Tableau 4**

| | **Catalyseurs** | **mmol/OH** | **% en pds** | **TFP** | **DSA 5h** | **DSA 1j** | **DSA 7j** | |
|---|---|---|---|---|---|---|---|---|
| | | | | **2 mm** | **3 × 2 mm** | | **6mm** | |
| | | | | | | | **<** | **>** |
| Catalyseurs de références | DLDBE | 0,7 | 0,9% | 5 min | 25 | 29 | 31 | 29 |
| | Ti(OnBu)₄ | 2,1 | 1,4% | 20 min | NR | NR | NR | |
| | Al(OsBu)₃ | 2,1 | 1,0% | 25 min | NR | NR | NR | |
| | Zr(OnPr)₄ | 2,1 | 1,4% | 20 min | NR | NR | NR | |
| Ex. 15 | AlZr(OsBu)₃(OnBu)₄ | 2,1 | 2,6% | n.d. | 8 | 9 | 13 | 28 |
| Comparatif | Al(OsBu)₃ | 2,1 | 1,0% | 10 min | C | D | D | |
| | Zr(OnBu)₄ | 2,1 | 1,6% | | | | | |
| Ex. 16 | Al₂Zr(OC₄H₉)₁₀ | 2,1 | 3,3% | 25 min | n.d. | 26 | 32 | 28 |
| Ex. 17 | AlTi(OsBu)₃(OnBu)₄ | 2,1 | 2,4% | n.d. | C | 9 | C | 19 |
| Comparatif | Al(OsBu)₃ | 2,1 | 1,4% | 6 min | C | 3 | 6 | 21 |
| | Ti(OnBu)₄ | 2,1 | 1,0% | | | | | |
| Ex. 18 | Al₂Ti(OEH)₁₀ | 2,1 | 5,9% | n.d. | n.d. | 22 | 36 | 31 |
| Comparatif | Al(OEH)₃ | 4,2 | 3,5% | 20 min | C | C | C | |
| | Ti(OEH)₄ | 2,1 | 2,4% | | | | | |
| Ex. 19 | Al₂Ti(OC₄H₉)₁₀ | 2,1 | 3,2% | 20 min | n.d. | 19 | 31 | 31 |

Les résultats des tests des catalyseurs chélates mixtes en présence de promoteur d'adhérence sont présentés dans le tableau 5 :

**Tableau 5**

| | **Catalyseurs** | **mmol/OH** | **% en pds** | **TFP** | **DSA 5h** | **DSA 1j** | **DSA 7j** | |
|---|---|---|---|---|---|---|---|---|
| | | | | **2 mm** | **3×2 mm** | | **6 mm** | |
| | | | | | | | **<** | **>** |
| catalyseurs de référence | DLDBE | 0,7 | 0,9% | 5 min | 25 | 29 | 31 | 29 |
| | Ti(OiPr)₂(EAA)₂ | 1,8 | 1,5% | 20 min | D | 15c | 28 | 25 |
| | Al(EAA)₃ | 2,1 | 1,0% | 10 min | C | D | C | |
| Ex. 20 | AlZr(EAA)₃(OnPr)₄ | 1,3 | 2,0% | 5 min | C | D | 11 | 23 |
| Comparatif | Al(EAA)₃ | 1,3 | 1,1% | 17 min | C | C | C | |
| | Zr(OnPr)₄ | 1,3 | 0,9% | | | | | |
| Ex. 21 | Al₂Zr(EAA)₆(OnPr)₄ | 1,3 | 3,0% | 12 min | n.d. | 17 | 30 | 30 |
| Ex. 22 | AlTi(EAA)₃(OnBu)₄ | 1,5 | 2,0% | 5 min | C | 2 | 16 | 23 |
| Comparatif | Al(EAA)₃ | 1,5 | 1,1% | 18 min | C | D | D | |
| | Ti(OnBu)₄ | 1,5 | 0,9% | | | | | |

En présence du promoteur d'adhérence, il est possible d'effectuer la polycondensation avec le catalyseur à l'étain (DLDBE). Par contre, la présence du silane aminé inhibe complètement la réactivité des catalyseurs de l'art antérieur sans étain.

Les complexes hétérométalliques selon l'invention, qui ne contiennent pas d'étain, ont une activité catalytique même en présence du promoteur d'adhésion. On a constaté que la réaction catalysée était plus rapide lorsque le rapport molaire Al/Zr ou Al/Ti était de 2.

### Exemple 7 : Tests d'adhérences

Pour réaliser des tests d'adhérence qualitative, un cordon de produit préparé à partir de la formulation décrite dans l'exemple 4 et du catalyseur à tester a été déposé sur des plaques de verre, de béton (côté face rugueuse) et d'aluminium anodisé préalablement nettoyés et brossés. Après une durée de réticulation de 7 jours (à 23°C et 50% HR), on a réalisé un pelage manuel après avoir fait une amorce de décollement à l'interface support/joint. Les résultats sont exprimés en fonction du type de rupture du cordon de produit :
- RA : rupture adhésive (le cordon se décolle du support) ;
- RA+ : rupture à tendance adhésive, mais nécessitant l'application d'une force pour décoller le cordon ;
- RA++ : rupture à tendance adhésive, mais nécessitant l'application d'une force importante pour décoller le cordon ;
- RC : rupture de type cohésive (le cordon rompt sous l'application d'une force très élevée, sans s'être décollé du support, même partiellement) ; dans ce cas l'adhérence sur le support est optimale.

Les résultats sont présentés dans le tableau 6 :

**Tableau 6**

| | **Catalyseurs** | **Adhésion sur un support :** | | |
|---|---|---|---|---|
| | | **verre** | **béton** | **aluminium** |
| Catalyseurs de références | DLDBE | RA | RA | RA |
| | Zr(OnPr)₄ | **RC** | RA | **RC** |
| | Ti(OnBu)₄ | RA | RA+ | RA+ |
| | Ti(EAA)₂(OiPr)₂ | RA | **RC** | **RC** |
| Ex. 23 | AlZr(OsBu)₃ (OnBu)₄ | **RC** | RA | **RC** |
| Ex. 24 | AlTi(OsBu)₃ (OnBu)₄ | **RC** | RA | **RC** |
| Comparatif | Al(OsBu)₃ + Ti(OnBu)₄ | **RC** | RA | RA+ |
| Ex. 25 | AlZr(EAA)₃(OnPr)₄ | **RC** | **RC** | **RC** |
| Ex. 26 | AlTi(EAA)₃(OnBu)₄ | **RC** | **RC** | **RC** |
| Comparatif | Al(EAA)₃ + Ti(OnBu)₄ | RA+ | **RC** | RA++ |

L'alcoxyde de zirconium permet d'obtenir des ruptures cohésives sur le verre et l'aluminium et adhésives sur le béton. Seul le catalyseur de référence chélate de titane permet l'adhésion aux trois supports. Quelle que soit la teneur en catalyseurs alcoxydes, les catalyseurs à base d'aluminium et de zirconium permettent une rupture cohésive sur le verre et l'aluminium et une rupture adhésive sur le béton. Les catalyseurs comportant des groupements chélates permettent d'obtenir des ruptures cohésives sur les trois supports. L'adhésion est perdue lorsque le mélange de catalyseurs monométalliques est effectué lors de la formulation. La présence du groupement chélate apporte l'adhérence de l'élastomère sur les supports. Il n'est donc pas nécessaire d'ajouter un promoteur d'adhérence comme avec la référence étain. La préformation du catalyseur est une fois encore indispensable pour un résultat optimal.

### Exemple 8 : Tests colorimétriques

Pour réaliser des tests de colorimétrie qualitative, un film de produit de 2 mm d'épaisseur a été préparé à partir de la formulation précédente et du catalyseur à tester. Après une durée de réticulation de 7 jours (à 23°C et 50% HR), l'opacité et la couleur jaune du film à travers une feuille blanche ont été évaluées qualitativement. Les résultats qualitatifs sont donnés en fonction des catalyseurs de références :
-- correspond à des élastomères transparent et sans couleur,
- correspond à film à tendance opaque,
+ correspond à un film un peu jaune,
++ correspond à un film jaune.

NH sera noté lorsque l'élastomère n'est pas homogène avec l'apparition de morceaux de catalyseurs non solubles dans l'huile.

Les résultats sont présentés dans le tableau 7 :

**Tableau 7**

| | **Catalyseurs** | **colorimétrie** | |
|---|---|---|---|
| | | **Opacité** | **Jaune** |
| Catalyseurs de références | DLDBE | -- | -- |
| | Zr(OnPr)₄ | -- | -- |
| | Ti(OnBu)₄ | -- | + |
| | Ti(EAA)₂(OiPr)₂ | -- | ++ |
| Ex. 27 | AlZr(OsBu)₃(OnBu)₄ | -- | -- |
| Comparatif | Al(OsBu)₃ + Zr(OnBu)₄ | -- | -- |
| Ex. 28 | AlTi(OsBu)₃(OnBu)₄ | -- | + |
| Comparatif | Al(OsBu)₃ + Ti(OnBu)₄ | -- | + + |
| Ex. 29 | AlZr(EAA)₃(OnPr)₄ | -- | -- |
| Comparatif | Al(EAA)₃ + Zr(OnBu)₄ | **NH** | **NH et-** |
| Ex. 30 | AlTi(EAA)₃(OnBu)₄ | - | ++ |
| Comparatif | Al(EAA)₃ + Ti(OnBu)₄ | **NH** | **NH et +** |

Les films contenant des catalyseurs à base de titane sont un peu, voire complètement jaunes. Ceux catalysés par des mélanges d'espèces monométalliques ne sont pas homogènes. Par contre, les élastomères à base d'aluminium et de zirconium sont parfaitement translucides.

### EXEMPLE 9 : Préparation d'une couche antisalissure « Top Coat » selon l'invention

On revêt une plaque de métal en acier sablé et dégraissé avec une couche primaire époxy (préparée à partir du SigmaShield 610® commercialisé par la société Sigma Coatings) d'une épaisseur de 50 µm environ. Après 72 heures de séchage à température ambiante on applique une couche favorisant l'adhérence "tie coat" (préparée à partir du SigmaGlide 790® commercialisé par la société Sigma Coatings) d'une épaisseur de 150 microns environ. Après 48 heures de séchage à température ambiante, on applique une couche de 150 µm environ du « top coat » préparé à partir de chaque formulation testée et décrite dans l'Exemple 4, avec les catalyseurs suivants :

| | |
|---|---|
| Ex. 1 | AlZr(OsBu)₃(OBu)₄ |
| Ex. 2 | Al_{1,4}Zr(OsBu)_{4,2}(OnBu)₄ |
| Ex. 3 | Al₂Zr(OC₄H₉)₁₀ |
| Ex. 4 | AlTi(OsBu)₃(OnBu)₄ |
| Ex. 5 | Al_{0,5}Ti(OsBu)_{1,5}(OnBu)₄ |
| Ex. 6 | Al₂Ti(OC₄H₉)₁₀ |
| Ex. 7 | AlTi_{0,2}(OsBu)₃(OnBu)_{0,8} |

Après un séchage de 48 heures à température ambiante, on plonge la plaque en milieu marin (dans de l'eau de mer) et on l'examine au bout de 12 et 23 semaines d'immersion.

Après lavage à grande eau, l'évaluation antifouling est de 100 pour toutes les formulations testées, ce qui indique l'absence complète d'organismes sur la plaque revêtue.

On revêt une plaque de métal antifouling préalablement traitée par une couche primaire époxy et d'une couche favorisant l'adhérence "tie-coat" (préparée à partir des produits Sigmaglide 790 vendu par la société Sigma Coatings) de 250 microns Apres avoir laissé durcir le revêtement à la température ambiante, on plonge la plaque dans de l'eau de mer et on l'examine au bout de 14 et 23 semaines d'immersion.

Après lavage à grande eau, l'évaluation antifouling est de 100, ce qui indique l'absence complète d'organismes sur la plaque revêtue.

## Revendications

1. Article présentant des propriétés antisalissure et destiné à être utilisé dans des applications aquatiques en particulier marines, comprenant :
a) un support **(1),**
b) au moins une couche favorisant l'adhérence **(3)** déposée sur ledit support **(1),** et
c) au moins une couche antisalissure **(4)** déposée sur ladite couche favorisant l'adhérence **(3),** ledit article étant **caractérisé en ce que** ladite couche antisalissure **(4)** est obtenue après dépôt et durcissement au contact de l'humidité de l'air d'une composition **X** comprenant :
(i) au moins un composé organosilicié **A'** comprenant au moins deux groupements hydrolysables et condensables, identiques ou différents, ou au moins deux fonctions silanols ≡SiOH,
(ii) au moins un agent de réticulation **B',** et
(iii) une quantité catalytiquement efficace d'au moins un catalyseur de polycondensation **C** qui est un complexe hétérométallique dont la formule chimique comprend :
• au moins deux atomes métalliques M et M'différents, M étant un atome choisi parmi le groupe constitué par les atomes des colonnes 2 et 13 du tableau périodique des éléments et M'étant un atome choisi parmi le groupe constitué par les atomes de la colonne 4 du tableau périodique des éléments, et
• au moins un ligand alcoxyde ou chélatant.

2. Article selon la revendication 1 comprenant :
a) un support **(1),**
b) au moins une couche primaire **(2)** déposée sur ledit support **(1)** comprenant au moins un produit anticorrosif,
c) au moins une couche **(3)** favorisant l'adhérence déposée sur ladite couche primaire **(2),** et
d) au moins une couche antisalissure **(4)** déposée sur ladite couche **(3)** favorisant l'adhérence, ledit article étant **caractérisé en ce que** ladite couche antisalissure **(4)** est obtenue après dépôt et durcissement au contact de l'humidité de l'air d'une composition **X** comprenant :
(i) au moins un composé organosilicié **A'** comprenant au moins deux groupements hydrolysables et condensables, identiques ou différents, ou au moins deux fonctions silanol ≡SiOH,
(ii) au moins un agent de réticulation **B',** et
(iii) une quantité catalytiquement efficace d'au moins un catalyseur de polycondensation **C** qui est un complexe hétérométallique dont la formule chimique comprend :
• au moins deux atomes métalliques M et M'différents, M étant un atome choisi parmi le groupe constitué par les atomes des colonnes 2 et 13 du tableau périodique des éléments et M'étant un atome choisi parmi le groupe constitué par les atomes de la colonne 4 du tableau périodique des éléments, et
• au moins un ligand alcoxyde ou chélatant.

3. Article selon l'une quelconques des revendications précédentes **caractérisé en ce que** la composition **X** comprend :
(i) au moins un composé organosilicié **A'** comprenant au moins deux groupements hydrolysables et condensables, identiques ou différents, ou au moins deux fonctions silanol ≡SiOH,
(ii) au moins un agent de réticulation **B',** et
(iii) une quantité catalytiquement efficace d'au moins un catalyseur de polycondensation **C** qui est un complexe hétérométallique dont la formule chimique comprend :
• au moins deux atomes métalliques M et M' différents, M étant un atome de magnésium ou d'aluminium et M'étant un atome de titane ou de zirconium, et
• au moins un ligand alcoxyde ou chélatant.

4. Article selon l'une quelconques des revendications précédentes **caractérisé en ce que** le catalyseur de polycondensation **C** est choisi parmi le groupe constitué par : AlZr(OBu)₄(OsBu)₃, Al₂Zr(OnBu)₄(OsBu)₆, AlZr₂(OnBu)₁₁, AlTi(OsBu)₃(OnBu)₄ et Al₂Ti(OnBu)₁₀.

5. Article selon l'une quelconques des revendications 1 à 3 dans lequel le catalyseur de polycondensation **C** est choisi parmi le groupe constitué par: AlZr(EAA)₃(OnPr)₄, Al₂Zr(EAA)₃(OnPr)₄, AlZr(EAA)₇, Al₂Zr(EAA)₁₀ et AlTi(EAA)₃(OnBu)₄.

6. Article selon l'une quelconques des revendications 1 à 3 dans lequel le composé organosilicié **A'** est un polyorganosiloxane comprenant :
(i) au moins deux motifs siloxyles de formule **(4')** suivante : 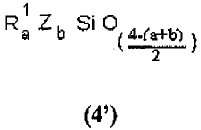 dans laquelle :
- les symboles R¹, identiques ou différents, représentent des radicaux hydrocarbonés monovalents en C₁ à C₃₀,
- les symboles Z, identiques ou différents, représentent chacun un groupement hydrolysable et condensable ou un groupement hydroxy et de préférence sont choisis parmi le groupe constitué par les groupements de type: hydroxy, alcoxy, alcoxy-alkylène-oxy, amino, amido, acylamino, aminoxy, iminoxy, cétiminoxy, acyloxy, iminoxi, cétiminoxy et énoxy et encore plus préférentiellement Z est un groupement hydroxy,
- a est égal à 0,1 ou 2, b est égal à 1,2 ou 3, la somme a + b est égale à 1,2 ou 3,
(ii) et éventuellement un ou plusieurs motif(s) siloxyle(s) de formule **(5')** suivante : 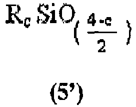 dans laquelle :
- les symboles R, identiques ou différents, représentent des radicaux hydrocarbonés monovalent en C₁ à C₃₀ éventuellement substitués par un ou plusieurs atomes d'halogène ou par des groupements : amino, éther, ester, époxy, mercapto ou cyano, et
- le symbole c est égal à 0, 1, 2 ou 3.

7. Article selon la revendication 1 ou 2 dans lequel l'agent de réticulation **B'** est un composé de silicium dont chaque molécule comprend au moins trois groupements hydrolysables et condensables **Y** et ledit agent de réticulation **B'** ayant la formule **(9')** suivante:
R'₍₄₋ₐ₎SiYₐ **(9')**
formule dans laquelle :
- le symbole R' est un radical hydrocarboné monovalent comprenant de 1 à 30 atomes de carbone,
- le symbole Y est un groupement alcoxy, alcoxy-alkylène-oxy, amino, amido, acylamino, aminoxy, iminoxy, cétiminoxy, acyloxy et énoxy et de préférence Y est un groupement alcoxy,
- le symbole a = 3 ou 4.

8. Article selon l'une quelconques des revendications précédentes **caractérisé en ce que** la composition **X** comprend :
(i) au moins un composé organosilicié **A'** comprenant au moins deux groupements hydrolysables et condensables, identiques ou différent, ou au moins deux fonctions silanol ≡SiOH,
(ii) au moins un agent de réticulation **B'**,
(iii) une quantité catalytiquement efficace d'au moins un catalyseur de polycondensation **C** tel que défini selon l'une quelconque des revendications 1 à 5,
(iv) au moins un composé **L'** qui exsude à la surface de la couche antisalissure lorsque le réseau élastomère est formé améliorant ainsi l'effet "antisalissure",
(v) éventuellement au moins un promoteur d'adhérence **E'**,
(vi) éventuellement au moins une charge minérale siliceuse, organique et/ou non siliceuse **F'**,
(vii) éventuellement au moins un pigment, une base colorante ou un agent de coloration **H',** et
(viii) éventuellement au moins un solvant **K'**.

9. Procédé d'application d'une couche antisalissure **(4)** sur un support **(1)** destiné à être utilisé dans des applications aquatiques comprenant les étapes suivante :
a) sur ledit support **(1)** il est éventuellement déposé au moins une couche primaire **(2)** comprenant au moins un produit anticorrosif,
b) une couche **(3)** favorisant l'adhérence est déposée sur ladite couche primaire **(2)** ou sur ledit support **(1)** lorsque la couche primaire **(2)** est absente,
c) ladite couche **(3)** favorisant l'adhérence est durcie,
d) une couche antisalissure **(4)** est déposée sur ladite couche **(3)** favorisant l'adhérence, et
e) ladite couche antisalissure **(4)** est durcie au contact de l'humidité de l'air,
- ledit procédé étant **caractérisé en ce que** la couche antisalissure **(4)** et éventuellement la couche **(3)** favorisant l'adhérence sont préparées à partir de la composition **X** telle que définie selon l'une quelconque des revendications 1 à 8.

10. Utilisation de la composition **X** telle que définie selon l'une quelconque des revendications 1 à 8 pour former après durcissement au contact de l'humidité de l'air une couche antisalissure **(4)** sur un article afin de le protéger contre l'adhésion d'organismes aquatiques.

## Patentansprüche

1. Gegenstand, der schmutzabweisende Eigenschaften aufweist und dazu bestimmt ist, im Wasser und insbesondere im Meerwasser zur Anwendung gebracht zu werden, wobei er Folgendes umfasst:
a) einen Träger **(1),**
b) mindestens eine Schicht **(3),** die das Haftvermögen begünstigt und auf den Träger **(1)** aufgebracht wird, und
c) mindestens eine schmutzabweisende Schicht **(4),** die auf die Schicht **(3),** welche das Haftvermögen begünstigt, aufgebracht wird,
wobei der Gegenstand **dadurch gekennzeichnet ist, dass** die schmutzabweisende Schicht **(4)** erhalten wird, nachdem eine Zusammensetzung **X** aufgebracht und durch Kontakt mit der Luftfeuchtigkeit zum Härten gebracht wurde, wobei diese Folgendes umfasst:
(i) mindestens eine Organosiliciumverbindung **A'**, die mindestens zwei hydrolysierbare und kondensierbare Gruppen, welche identisch oder verschiedenartig sind, oder mindestens zwei funktionelle Silanolgruppen =SiOH umfasst,
(ii) mindestens ein Vernetzungsmittel **B'**, und
(iii) eine katalytisch wirksame Menge mindestens eines Polykondensationskatalysators **C,** bei welchem es sich um einen Heterometallkomplex handelt, dessen chemische Formel Folgendes umfasst:
• mindestens zwei verschiedenartige Metallatome M und M', wobei M für ein Atom steht, das aus der Gruppe ausgewählt ist, welche aus den Atomen der Gruppen 2 und 13 des Periodensystems der Elemente besteht, und M' für ein Atom steht, das aus der Gruppe ausgewählt ist, welche aus den Atomen der Gruppe 4 des Periodensystems der Elemente besteht, und
• mindestens einen Alkoxidliganden oder Chelatbildner.

2. Gegenstand nach Anspruch 1, welcher Folgendes umfasst:
a) einen Träger **(1),**
b) mindestens eine Grundierungsschicht **(2),** die auf den Träger **(1)** aufgebracht wird, wobei sie mindestens ein Korrosionsschutzmittel umfasst,
c) mindestens eine Schicht **(3),** die das Haftvermögen begünstigt und auf die Grundierungsschicht **(2)** aufgebracht wird, und
d) mindestens eine schmutzabweisende Schicht **(4),** die auf die Schicht **(3),** welche das Haftvermögen begünstigt, aufgebracht wird,
wobei der Gegenstand **dadurch gekennzeichnet ist, dass** die schmutzabweisende Schicht **(4)** erhalten wird, nachdem eine Zusammensetzung **X** aufgebracht und durch Kontakt mit der Luftfeuchtigkeit zum Härten gebracht wurde, wobei diese Folgendes umfasst:
(i) mindestens eine Organosiliciumverbindung **A',** die mindestens zwei hydrolysierbare und kondensierbare Gruppen, welche identisch oder verschiedenartig sind, oder mindestens zwei funktionelle Silanolgruppen ≡SiOH umfasst,
(ii) mindestens ein Vernetzungsmittel **B',** und
(iii) eine katalytisch wirksame Menge mindestens eines Polykondensationskatalysators **C,** bei welchem es sich um einen Heterometallkomplex handelt, dessen chemische Formel Folgendes umfasst:
• mindestens zwei verschiedenartige Metallatome M und M', wobei M für ein Atom steht, das aus der Gruppe ausgewählt ist, welche aus den Atomen der Gruppen 2 und 13 des Periodensystems der Elemente besteht, und M' für ein Atom steht, das aus der Gruppe ausgewählt ist, welche aus den Atomen der Gruppe 4 des Periodensystems der Elemente besteht, und
• mindestens einen Alkoxidliganden oder Chelatbildner.

3. Gegenstand nach einem beliebigen der vorhergehenden Ansprüche, **dadurch gekennzeichnet, dass** die Zusammensetzung **X** Folgendes umfasst:
(i) mindestens eine Organosiliciumverbindung **A'**, die mindestens zwei hydrolysierbare und kondensierbare Gruppen, welche identisch oder verschiedenartig sind, oder mindestens zwei funktionelle Silanolgruppen ≡SiOH umfasst,
(ii) mindestens ein Vernetzungsmittel **B',** und
(iii) eine katalytisch wirksame Menge mindestens eines Polykondensationskatalysators **C,** bei welchem es sich um einen Heterometallkomplex handelt, dessen chemische Formel Folgendes umfasst:
• mindestens zwei verschiedenartige Metallatome M und M', wobei M für ein Magnesium- oder Aluminiumatom steht und M' für ein Titan- oder Zirkoniumatom steht, und
• mindestens einen Alkoxidliganden oder Chelatbildner.

4. Gegenstand nach einem beliebigen der vorhergehenden Ansprüche, **dadurch gekennzeichnet, dass** der Polykondensationskatalysator **C** aus der Gruppe ausgewählt ist, die aus den folgenden besteht: AlZr(OBu)₄(OsBu)₃, Al₂Zr(OnBu)₄(OsBu)₆, AlZr₂(OnBu)₁₁, AlTi(OsBu)₃(OnBu)₄ und Al₂Ti(OnBu)₁₀.

5. Gegenstand nach einem beliebigen der Ansprüche 1 bis 3, **dadurch gekennzeichnet, dass** der Polykondensationskatalysator **C** aus der Gruppe ausgewählt ist, die aus den folgenden besteht: AlZr(EAA)₃(OnPr)₄, Al₂Zr(EAA)₃(OnPr)₄, AlZr(EAA)₇, Al₂Zr(EAA)₁₀ und AlTi(EAA)₃(OnBu)₄.

6. Gegenstand nach einem beliebigen der Ansprüche 1 bis 3, wobei es sich bei der Organosiliciumverbindung **A'** um ein Polyorganosiloxan handelt, das Folgendes umfasst:
(i) mindestens zwei Siloxylbausteine nach der folgenden Formel **(4'):** 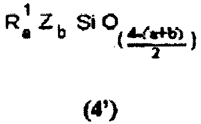 wobei:
- die Formelzeichen R¹, welche identisch oder verschiedenartig sind, für einbindige C₁- bis C₃₀-Kohlenwasserstoffreste stehen,
- die Formelzeichen Z, welche identisch oder verschiedenartig sind, jeweils für eine hydrolysierbare und kondensierbare Gruppe oder eine Hydroxygruppe stehen, wobei sie vorzugsweise aus der Gesamtheit ausgewählt sind, welche aus den Gruppen der folgenden Typen besteht: Hydroxy, Alkoxy, Alkoxy-Alkylenoxy, Amino, Amido, Acylamino, Aminoxy, Iminoxy, Cetiminoxy, Acyloxy, Iminoxi, Cetiminoxy und Enoxy, wobei Z mit noch größerem Vorzug für eine Hydroxygruppe steht,
- a gleich 0, 1 oder 2 ist, b gleich 1, 2 oder 3 ist, wobei die Summe a + b gleich 1, 2 oder 3 ist,
(ii) und möglicherweise einen oder mehrere Siloxylbausteine nach der folgenden Formel **(5'):** 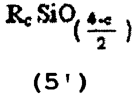 wobei:
- die Formelzeichen R, welche identisch oder verschiedenartig sind, für einbindige C₁- bis C₃₀-Kohlenwasserstoffreste stehen, die möglicherweise mit einem oder mehreren Halogenatomen oder mit den folgenden Gruppen subsituiert sind: Amino, Ether, Ester, Epoxid, Mercapto oder Cyan, und
- das Formelzeichen c gleich 0, 1, 2 oder 3 ist.

7. Gegenstand nach Anspruch 1 oder 2, wobei es sich bei dem Vernetzungsmittel **B'** um eine Siliciumverbindung handelt, deren Moleküle jeweils drei hydrolysierbare und kondensierbare Gruppen **Y** umfassen, und wobei das Vernetzungsmittel **B'** die folgende Formel (**9'**) hat:
**R'₍₄₋ₐ₎SiYₐ** **(9')**
wobei in dieser Formel
- das Formelzeichen R' für einen einbindigen Kohlenwasserstoffrest steht, der 1 bis 30 Kohlenstoffatome umfasst,
- das Formelzeichen Y für eine der Gruppen Alkoxy, Alkoxy-Alkylenoxy, Amino, Amido, Acylamino, Aminoxy, Iminoxy, Cetiminoxy, Acyloxy und Enoxy steht, wobei Y vorzugsweise für eine Alkoxygruppe steht,
- das Formelzeichen a = 3 oder 4 ist.

8. Gegenstand nach einem beliebigen der vorhergehenden Ansprüche, **dadurch gekennzeichnet, dass** die Zusammensetzung **X** Folgendes umfasst:
(i) mindestens eine Organosiliciumverbindung **A',** die mindestens zwei hydrolysierbare und kondensierbare Gruppen, welche identisch oder verschiedenartig sind, oder mindestens zwei funktionelle Silanolgruppen =SiOH umfasst,
(ii) mindestens ein Vernetzungsmittel **B',**
(iii) eine katalytisch wirksame Menge mindestens eines Polykondensationskatalysators **C** wie er nach einem beliebigen der Ansprüche 1 bis 5 definiert ist,
(iv) mindestens eine Verbindung **L',** die an der Oberfläche der schmutzabweisenden Schicht austritt, wenn sich das Elastomernetzwerk ausbildet, wodurch die "schmutzabweisende" Wirkung verbessert wird,
(v) möglicherweise mindestens einen Haftvermittler **E',**
(vi) möglicherweise mindestens einen siliciumdioxidartigen, organischen und/oder nicht-siliciumdioxidartigen mineralischen Füllstoff **F',**
(vii) möglicherweise mindestens ein Pigment, eine Farbstoffgrundlage oder ein Färbungsmittel **H'**, und
(viii) möglicherweise mindestens ein Lösungsmittel **K'**.

9. Verfahren zum Aufbringen einer schmutzabweisenden Schicht **(4)** auf einen Träger **(1),** der dazu bestimmt ist, im Wasser zur Anwendung gebracht zu werden, wobei es die folgenden Schritte umfasst:
a) auf den Träger **(1)** wird möglicherweise mindestens eine Grundierungsschicht **(2)** aufgebracht, die mindestens ein Korrosionsschutzmittel umfasst,
b) eine Schicht **(3),** die das Haftvermögen begünstigt, wird auf die Grundierungsschicht **(2)** aufgebracht, oder auf den Träger **(1)**, falls die Grundierungsschicht **(2)** fehlt,
c) die Schicht **(3),** welche das Haftvermögen begünstigt, wird gehärtet,
d) eine schmutzabweisende Schicht **(4)** wird auf die Schicht **(3),** welche das Haftvermögen begünstigt, aufgebracht, und
e) die schmutzabweisende Schicht **(4)** wird durch Kontakt mit der Luftfeuchtigkeit zum Härten gebracht,
- wobei das Verfahren **dadurch gekennzeichnet ist, dass** die schmutzabweisende Schicht **(4)** und gegebenenfalls die Schicht **(3),** welche das Haftvermögen begünstigt, ausgehend von der Zusammensetzung **X** hergestellt werden, wie sie nach einem beliebigen der Ansprüche 1 bis 8 definiert ist.

10. Verwendung der Zusammensetzung **X** wie sie nach einem beliebigen der Ansprüche 1 bis 8 definiert ist, um nach der Härtung durch Kontakt mit der Luftfeuchtigkeit auf einem Gegenstand eine schmutzabweisende Schicht **(4)** zu bilden, sodass dieser gegen das Anhaften von Wasserorganismen geschützt wird.

## Claims

1. Article with antifouling properties for use in aquatic applications, in particular marine applications, comprising:
a) a support **(1),**
b) at least one adhesion-promoting coat **(3)** deposited on said support **(1),** and
c) at least one antifouling coat **(4)** deposited on said adhesion-promoting coat **(3),**
said article being **characterized in that** said antifouling coat **(4)** is obtained after deposition and curing on contact with atmospheric moisture of a composition **X** comprising:
(i) at least one organosilicon compound **A'** comprising at least two identical or different hydrolyzable and condensable groups, or at least two silanol functions ≡SiOH,
(ii) at least one crosslinking agent **B'**, and
(iii) a catalytically effective amount of at least one polycondensation catalyst **C** which is a heterometallic complex whose chemical formula comprises:
• at least two different metal atoms M and M', M being an atom chosen from the group constituted by the atoms of columns 2 and 13 of the Periodic Table of the Elements and M' being an atom chosen from the group constituted by the atoms of column 4 of the Periodic Table of the Elements, and
• at least one alkoxide ligand or chelating ligand.

2. Article according to Claim 1, comprising:
a) a support **(1),**
b) at least one primer coat **(2)** deposited on said support **(1)** comprising at least one anticorrosion product,
c) at least one adhesion-promoting coat **(3)** deposited on said primer coat **(2),** and
d) at least one antifouling coat **(4)** deposited on said adhesion-promoting coat **(3),**
said article being **characterized in that** said antifouling coat **(4)** is obtained after deposition and curing on contact with atmospheric moisture of a composition **X** comprising:
(i) at least one organosilicon compound **A'** comprising at least two identical or different hydrolyzable and condensable groups, or at least two silanol functions ≡SiOH,
(ii) at least one crosslinking agent **B'**, and
(iii) a catalytically effective amount of at least one polycondensation catalyst **C** which is a heterometallic complex whose chemical formula comprises:
• at least two different metal atoms M and M', M being an atom chosen from the group constituted by the atoms of columns 2 and 13 of the Periodic Table of the Elements and M' being an atom chosen from the group constituted by the atoms of column 4 of the Periodic Table of the Elements, and
• at least one alkoxide ligand or chelating ligand.

3. Article according to either of the preceding claims, **characterized in that** composition **X** comprises:
(i) at least one organosilicon compound **A'** comprising at least two identical or different hydrolyzable and condensable groups, or at least two silanol functions ≡SiOH,
(ii) at least one crosslinking agent **B'**, and
(iii) a catalytically effective amount of at least one polycondensation catalyst **C** which is a heterometallic complex whose chemical formula comprises:
• at least two different metal atoms M and M', M being a magnesium or aluminum atom and M' being a titanium or zirconium atom, and
• at least one alkoxide ligand or chelating ligand.

4. Article according to any one of the preceding claims, **characterized in that** the polycondensation catalyst **C** is chosen from the group constituted by: AlZr(OBu)₄(OsBu)₃, Al₂Zr(OnBu)₄(OsBu)₆, AlZr₂(OnBu)₁₁, AlTi(OsBu)₃(OnBu)₄ and Al₂Ti(OnBu)₁₀.

5. Article according to any one of Claims 1 to 3, in which the polycondensation catalyst C is chosen from the group constituted by: AlZr(EAA)₃(OnPr)₄, Al₂Zr(EAA)₃(OnPr)₄, AlZr(EAA)₇, Al₂Zr(EAA)₁₀ and AlTi(EAA)₃(OnBu)₄.

6. Article according to any one of Claims 1 to 3, in which the organosilicon compound **A'** is a polyorganosiloxane comprising:
(i) at least two siloxyl units of formula **(4')** below: 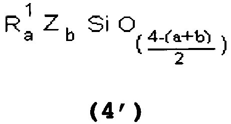 in which:
- the symbols R¹, which may be identical or different, represent C₁ to C₃₀ monovalent hydrocarbon-based radicals,
- the symbols Z, which may be identical or different, each represent a hydrolyzable and condensable group or a hydroxyl group and are preferably chosen from the group consisting of groups of the following types: hydroxyl, alkoxy, alkoxy-alkylene-oxy, amino, amido, acylamino, aminoxy, iminoxy, ketiminoxy, acyloxy, iminoxy, ketiminoxy and enoxy and even more preferentially Z is a hydroxyl group,
- a is equal to 0, 1 or 2, b is equal to 1, 2 or 3, the sum a + b is equal to 1, 2 or 3,
(ii) and optionally one or more siloxyl units of formula **(5')** below: 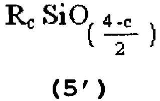 in which:
- the symbols R, which may be identical or different, represent C₁ to C₃₀ monovalent hydrocarbon-based radicals optionally substituted with one or more halogen atoms or with amino, ether, ester, epoxy, mercapto or cyano groups, and
- the symbol c is equal to 0, 1, 2 or 3.

7. Article according to Claim 1 or 2, in which the crosslinking agent **B'** is a silicon compound, each molecule of which comprises at least three hydrolyzable and condensable groups **Y** and said crosslinking agent **B'** having formula **(9')** below:
R'₍₄₋ₐ₎SiYₐ **(9')**
in which formula:
- the symbol R' is a monovalent hydrocarbon-based radical comprising from 1 to 30 carbon atoms,
- the symbol Y is an alkoxy, alkoxy-alkylene-oxy, amino, amido, acylamino, aminoxy, iminoxy, ketiminoxy, acyloxy or enoxy group and preferably Y is an alkoxy group,
- the symbol a = 3 or 4.

8. Article according to any one of the preceding claims, **characterized in that** composition **X** comprises:
(i) at least one organosilicon compound **A'** comprising at least two identical or different hydrolyzable and condensable groups, or at least two silanol functions ≡SiOH,
(ii) at least one crosslinking agent **B'**,
(iii) a catalytically effective amount of at least one polycondensation catalyst **C** as defined according to any one of claims 1 to 5,
(iv) at least one compound **L'** which exudes at the surface of the antifouling coat when the elastomer network is formed, thus improving the "antifouling" effect,
(v) optionally at least one adhesion promoter **E'**,
(vi) optionally at least one siliceous mineral, organic and/or non-siliceous filler **F'**,
(vii) optionally at least one pigment, a coloring base or a coloring agent **H',** and
(viii) optionally at least one solvent **K'**.

9. Process for applying an antifouling coat **(4)** to a support **(1)** intended to be used in aquatic applications, comprising the following steps:
a) at least one primer coat **(2)** comprising at least one anticorrosion product is optionally deposited on said support **(1),**
b) an adhesion-promoting coat **(3)** is deposited on said primer coat **(2)** or on said support **(1)** when the primer coat **(2)** is absent,
c) said adhesion-promoting coat **(3)** is cured,
d) an antifouling coat **(4)** is deposited on said adhesion-promoting coat **(3),** and
e) said antifouling coat **(4)** is cured on contact with atmospheric moisture,
- said process being **characterized in that** the antifouling coat **(4)** and optionally the adhesion-promoting coat **(3)** are prepared from composition **X** as defined according to any one of Claims 1 to 8.

10. Use of composition **X** as defined according to any one of Claims 1 to 8, for forming, after curing on contact with atmospheric moisture, an antifouling coat **(4)** on an article so as to protect it against the adhesion of aquatic organisms.
